(19) **Europäisches Patentamt / European Patent Office / Office européen des brevets**

(11) **EP 2 503 783 B1**

(12) **EUROPEAN PATENT SPECIFICATION**

(45) Date of publication and mention of the grant of the patent:
**09.11.2016 Bulletin 2016/45**

(21) Application number: **10835447.3**

(22) Date of filing: **25.11.2010**

(51) Int Cl.:
*H04N 19/176* $^{(2014.01)}$     *H04N 19/46* $^{(2014.01)}$
*H04N 19/103* $^{(2014.01)}$

(86) International application number:
**PCT/CN2010/079117**

(87) International publication number:
**WO 2011/069412 (16.06.2011 Gazette 2011/24)**

(54) **VIDEO ENCODING METHOD, DECODING METHOD, ENCODING AND DECODING DEVICE**

VIDEOKODIERUNGSVERFAHREN, -DEKODIERUNGSVERFAHREN, -KODIERUNGSVORRICHTUNG UND -DEKODIERUNGSVORRICHTUNG

PROCÉDÉ DE CODAGE VIDÉO, PROCÉDÉ DE DÉCODAGE, DISPOSITIF DE CODAGE ET DE DÉCODAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.12.2009 CN 200910251282**

(43) Date of publication of application:
**26.09.2012 Bulletin 2012/39**

(73) Proprietor: **Huawei Technologies Co., Ltd.**
**Longgang District**
**Shenzhen, Guangdong 518129 (CN)**

(72) Inventors:
• **YU, Lu**
  **Shenzhen**
  **Guangdong 518129 (CN)**
• **YU, Binbin**
  **Shenzhen**
  **Guangdong 518129 (CN)**
• **LI, Shangwen**
  **Shenzhen**
  **Guangdong 518129 (CN)**
• **WANG, Dong**
  **Shenzhen**
  **Guangdong 518129 (CN)**
• **YANG, Mingyuan**
  **Shenzhen**
  **Guangdong 518129 (CN)**
• **XIONG, Lianhuan**
  **Shenzhen**
  **Guangdong 518129 (CN)**

(74) Representative: **Körber, Martin Hans**
**Mitscherlich PartmbB**
**Patent- und Rechtsanwälte**
**Sonnenstrasse 33**
**80331 München (DE)**

(56) References cited:
**WO-A1-2008/082253**    **CN-A- 101 129 072**
**CN-A- 101 137 065**    **CN-A- 101 159 875**
**CN-A- 101 262 607**

• **SHANGWEN LI ET AL: "Second Order Prediction of Video Coding", 87. MPEG MEETING; 2-2-2009 - 6-2-2009; LAUSANNE; (MOTION PICTURE EXPERT GROUP OR ISO/IEC JTC1/SC29/WG11), no. M16109, 29 January 2009 (2009-01-29), pages 1-8, XP030044706,**
• **CHEN S ET AL: "Second order prediction in P slice", 35. VCEG MEETING; 85. MPEG MEETING; 16-7-2008 - 18-7-2008; BERLIN; (VIDEO CODING EXPERTS GROUP OF ITU-T SG.16), no. VCEG-AI27, 12 July 2008 (2008-07-12), XP030003592, ISSN: 0000-0096**
• **SHANGWEN LI ET AL: "Second Order Prediction on H.264/AVC", PICTURE CODING SYMPOSIUM 2009; 6-5-2009 - 8-5-2009; CHICAGO, 6 May 2009 (2009-05-06), pages 1-4, XP030081844,**

EP 2 503 783 B1

   **(Cont. next page)**

- SEGALL C A ET AL: "Spatial Scalability Within the H.264/AVC Scalable Video Coding Extension", IEEE TRANSACTIONS ON CIRCUITS AND SYSTEMS FOR VIDEO TECHNOLOGY, IEEE SERVICE CENTER, PISCATAWAY, NJ, US, vol. 17, no. 9, 1 September 2007 (2007-09-01), pages 1121-1135, XP011193020, ISSN: 1051-8215, DOI: 10.1109/TCSVT.2007.906824
- BINBIN YU ET AL: "Block-Based Second Order Prediction on AVS-Part 2", PICTURE CODING SYMPOSIUM 2010; 8-12-2010 - 10-12-2010; NAGOYA,, 8 December 2010 (2010-12-08), XP030082049,
- ANONYMOUS: 'ITU-T Recommendation H.264: Advanced video coding for generic audiovisual services [part]', [Online] 01 November 2007, Retrieved from the Internet: <URL:http://www.itu.int/rec/T-REC-H.264-200 711-S/en> [retrieved on 2015-10-14]
- ANONYMOUS: 'Joint Draft 7 of SVC Amendment (revision 2) [part]' 20. JVT MEETING; 77. MPEG MEETING; 15-07-2006 - 21-07-2006; KLAGENFURT, AT; (JOINT VIDEO TEAM OF ISO/IEC JTC1/SC29/WG11 AND ITU-TSG.16 ) no. JVT-T201, 16 September 2006, ISSN: 0000-0408

**Description**

**FIELD OF THE INVENTION**

The present invention relates to the field of video coding and decoding technologies, and in particular, to a video coding and decoding method, and coding and decoding apparatus.

**BACKGROUND OF THE INVENTION**

A large amount of redundant information exists in video signals. Such redundant information may be divided into spatial redundant information, time redundant information, data redundant information, and visually redundant information.

Video compression technologies are generally based on a conventional hybrid coding (Hybrid Coding) framework integrating block-directed coding, prediction coding, transform coding, and entropy coding.

According to the conventional hybrid coding framework, in prediction coding, a coding frame is divided into coding units, prediction coding is performed on the coding units to obtain a prediction value, a difference, i.e., residual data, between the prediction value and a value to be coded is calculated, and two-dimensional transform coding is performed on the residual data; the transform coefficient is quantized and scanned in the transform domain, and then converted into a one-dimension signal, and finally entropy coding is performed.

In the prior art, a coding and decoding method of using second order prediction is proposed. According to the method, the prediction in the conventional hybrid coding framework is defined as the first order prediction, and the process of image reconstruction using the decoding technology includes a second order prediction and compensation process and second order prediction storage; correspondingly, the prediction residual in the conventional hybrid coding framework is defined as the first order residual, and the prediction for the first order residual is defined as the second order prediction. The second order prediction and compensation process includes the first order prediction and compensation process and the second order prediction and compensation process. In the second order prediction and compensation process, the first order residual after reconstruction and the second order residual after reconstruction are input to obtain the residual after reconstruction.

The coding method includes the second order prediction process and the second order prediction storage. The second order prediction process includes the first order prediction process and the second order prediction process. In the second order prediction process, the first order residual and the prediction value of the first order residual are input to obtain the second order residual. The prediction value of the first order residual is generated from the first order residual after reconstruction using the prediction method in second order mode. A corresponding bit stream generated by using the coding method includes the first order mode and the second order residual, with the first order residual excluded; or includes the first order mode, the second order mode, and the second order residual, with the first order residual excluded.

During implementation of the present invention, it is found that the prior art has at least the following disadvantage: second order prediction is directed to a macroblock, which to be specific is, for a macroblock, either all its sub-blocks use second order prediction or none of its sub-blocks use second order prediction, and consequently, second order prediction lacks flexibility and the coding efficiency is low.

SHANGWEN LI ET AL:"Second order prediction of Video Coding", 87. MPEG MEETING; 2-2-2009 - 6-2-2009;LAUSANNE;(MOTION PICTURE EXPERT GROUP OR ISO/IEC JTC1/SC29/WG11), no. M16109, 29 January 2009 (2009-01-29), pages 1-8, XP030044706, discloses a scheme of second order prediction (SOP). The SOP applies prediction to residues of the current inter-prediction scheme, Correspondently, if a macroblock is indicated as a SOP macroblock, the reconstructed pixel-value of this macroblock is generated as:

reconstructed pixel-value = Motion-compensated prediction (first-predictor) + prediction of First Order residues (second-predictor) + Second Order Residues (need to be coded). The first prediction of SOP is the traditional inter-prediction of H.264, while the second prediction uses intra-prediction uses intra-prediction modes of H.264.

SEGALL C A ET AL:"Spatial Scalability Within the H.264/AVC Scalable Video Coding Extension", IEEE TRANSACTIONS ON CRICUITS AND SYSTEMS FOR VIDEO TECHNOLOGY, IEEE SERVICE CENTER, PISCATAWAY, NJ, US, vol. 17, no. 9, 1 September 2007 (2007-09-01), pages 1121-1135, XP011193020, ISSN:1051-8215, DOI:10.1109/TCSVT. 2007.906824, discloses, in left column on page 1129, an inter-layer residual prediction technique which can perform residual prediction as being activated by a flag, called the residual flag, that can be sent in the marcoblcock level syntax of the higher resolution layer for nonskipped marcoblocks. When the residual prediction is performed instead of fully decoding the picture samples of the lower resolution layer, the residual difference data of the lower resolution layer is decoded and up-sampled and added to the motion compensated prediction of the higher resolution layer (without using the inter-picture prediction signal of the lower resolution layer). To save the need to repeatedly send the residual prediction flag in cases when an encoder will always apply residual prediction to applicable macroblocks, residual prediction can alternatively be enabled by default using syntax at the slice header level. (See the footnote 5, bottom of the left column on page 1129)

WO2008/082253A1 discloses a multi-view image encoding method. The multi-view image encoding method selects a block corresponding to a current block from another picture having a view-point which is different from a view-point of a current picture to which the current block belongs, on the basis of a global disparity vector representing a global disparity between the current picture and the other picture; and encodes the current block on the basis of block information of a block from among the selected block and blocks adjacent to the selected block. (See abstract)

SUMMARY OF THE INVENTION

Embodiments of the present invention provide a video coding and decoding method, and coding and decoding apparatus, refining the unit of the coding and decoding block identified by the second order prediction flag for second order prediction, so as to enhance flexibility of second order prediction, and improve the coding and decoding efficiency.

An embodiment of the present invention provides a video coding method according to claim 1.

An embodiment of the present invention provides a video coding apparatus according to claim 3.

According to the video coding method and coding apparatus provided in the embodiments of the present invention, the unit identified by the second order prediction flag for second order prediction is refined to a sub-block level in a way of identifying the sub-block of the coding block by using the second order prediction flag of the sub-block, i.e., the unit of the coding block identified by the second order prediction flag for second order prediction is refined, which may enhance the flexibility of second order prediction and improve the coding and decoding efficiency.

An embodiment of the present invention provides a video decoding method according to claim 2.

An embodiment of the present invention provides a video decoding apparatus according to claim 4.

According to the video decoding method and decoding apparatus provided in the embodiments of the present invention, the unit for second order prediction is refined to the sub-block level by obtaining the second order prediction flag of the sub-block identifying the first-level sub-block of the decoding block, i.e., the unit of the decoding block identified by the second order prediction flag for second order prediction is refined, which may enhance the flexibility of second order prediction and improve the decoding efficiency.

BRIEF DESCRIPTION OF THE DRAWINGS

To make the technical solution of the embodiments of the present invention clearer, the accompanying drawings for illustrating the embodiments of the present invention are briefly described below. Apparently, the accompanying drawings illustrate some exemplary embodiments of the present invention, and persons skilled in the art may derive other drawings from such accompanying drawings without creative efforts.

FIG. 1 is a flowchart of a video coding method according to a first embodiment of the present invention;

FIG. 2 is a flowchart of a video decoding method according to a second embodiment of the present invention;

FIG. 3 is a flowchart of a video coding method according to a third embodiment of the present invention;

FIG. 4 is a schematic diagram of the structure of a macroblock according to the third embodiment, a fourth embodiment, a fifth embodiment, and a sixth embodiment of the present invention;

FIG. 5 is a flowchart of a video decoding method according to the fourth embodiment of the present invention;

FIG. 6 is a flowchart of a video coding method according to the fifth embodiment of the present invention;

FIG. 7 is a flowchart of a video decoding method according to the sixth embodiment of the present invention;

FIG. 8 is a flowchart of a video coding method according to a seventh embodiment of the present invention;

FIG. 9 is a schematic diagram of the structure of a macroblock according to the seventh embodiment and an eighth embodiment of the present invention;

FIG. 10 is a flowchart of a video decoding method according to the eighth embodiment of the present invention;

FIG. 11 is a schematic diagram of a CABAC process in a video coding method according to an embodiment of the present invention;

FIG. 12 is a flowchart of arithmetic coding in CABAC in a video coding method according to an embodiment of the present invention;

FIG. 13 is a flowchart of a coding method for syntax element sub_sop_flag of an m x n sub-block in a video coding method according to an embodiment of the present invention;

FIG. 14 is a schematic diagram of a sub-block involved in a coding method for syntax element sub_sop_flag of an m x n sub-block in a video coding method according to an embodiment of the present invention;

FIG. 15 is a flowchart of a decoding method for syntax element sub_sop_flag of an m x n sub-block in the decoding method according to an embodiment of the present invention;

FIG. 16 is a schematic structural diagram of a video coding apparatus according to an embodiment of the present invention; and

FIG. 17 is a schematic structural diagram of a video decoding apparatus according to an embodiment of the present invention.

## DETAILED DESCRIPTION OF THE EMBODIMENTS

The technical solution disclosed in embodiments of the present invention is hereinafter described clearly and completely with reference to embodiments and accompanying drawings. Evidently, the embodiments are exemplary only, not covering all embodiments of the present invention.

When the second order prediction technology is used in coding and decoding, the following syntax elements may be added: second order prediction flag (Second Order Prediction Flag, sop_flag), prediction second prediction mode flag (Prediction Second Prediction Mode Flag, pred_sp_mode_flag), and remaining second prediction mode (Remaining Second Prediction Mode, rem_sp_mode).

sop_flag is a second order prediction flag used for identifying whether the second order prediction technology is used in the current coding or decoding block. The value of sop_flag is 0 or 1. To be specific, for a coding or decoding block, sop_flag in a bit stream indicates whether all sub-blocks in the coding or decoding block use second order prediction or none of the sub-blocks use second order prediction. When the value of sop_flag of the macroblock is 0, it indicates that none of the sub-blocks of the coding or decoding block use second order prediction for reconstruction. In this case, syntax elements pred_sp_mode_flag and rem_sp_mode do not need to be generated at the coding end, and syntax elements pred_sp_mode_flag and rem_sp_mode do not need to be parsed from the bit stream at the decoding end. When the value of sop_flag of the coding or decoding block is 1, it indicates that all sub-blocks of the coding or decoding block use second order prediction for reconstruction. In this case, syntax elements pred_sp_mode_flag and rem_sp_mode are generated at the coding end and written into a bit stream after being entropy coded, and syntax elements pred_sp_mode_flag and rem_sp_mode are parsed from the bit stream at the decoding end.

pred_sp_mode_flag and rem_sp_mode are syntax elements related to the second order intra-frame prediction mode. The value of the second order intra-frame prediction mode ranges from 0 to 8, representing nine intra-frame prediction modes respectively. The decoding method in second order intra-frame prediction mode is the same as that in 4 x 4 intra-frame prediction mode defined in H.264/AVC, that is, to check whether the prediction is accurate. If the prediction is accurate, the mode corresponding to the mode prediction value is used; if the prediction is not accurate, information needs to be continuously parsed from the bit stream to obtain the mode.

pred_sp_mode_flag indicates whether the prediction in second order intra-frame prediction mode is accurate. The value of pred_sp_mode_flag is 0 or 1. rem_sp_mode is the information used to indicate the second order intra-frame prediction mode when the prediction in second order intra-frame prediction mode is not accurate. If the prediction in current second order intra-frame prediction mode is accurate, the bit stream does not have syntax element rem_sp_mode in current second order intra-frame prediction mode. The value of rem_sp_mode ranges from 0 to 7.

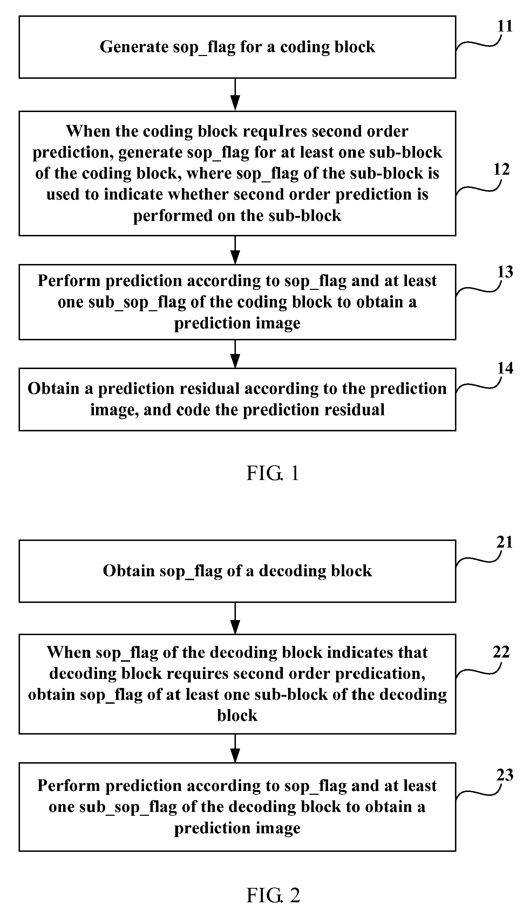

FIG. 1 is a flowchart of a video coding method according to a first embodiment of the present invention. The method includes the following steps:

Step 11: Generate sop_flag for a coding block.

For example, sop_flag is generated for the coding block according to a rule, or sop_flag is generated for the coding block adaptively. If sop_flag is generated adaptively, sop_flag does not need to be written into a bit stream after being entropy coded, and transmitted to the decoding end.

Step 12: When the coding block needs second order prediction, generate sop_flag for at least one sub-block of the coding block, where sop_flag of the sub-block is used to indicate whether second order prediction is performed on the sub-block.

When the coding block needs second order prediction, in the coding block corresponding to sop_flag, second order prediction is performed on at least one first-level sub-block. In this case, sop_flag is generated for each sub-block of the coding block. For ease of description, sop_flag of the sub-block is hereinafter referred to as a sub second order prediction flag (Sub Second Order Prediction Flag, sub_sop_flag), where the sub_sop_flag is used to indicate whether second order prediction is performed on a corresponding sub-block.

If the value of sop_flag is 0, it indicates that second order prediction is performed on none of the sub-blocks of a corresponding coding block; if the value of sop_flag is 1, it indicates that second order prediction is performed on at least one sub-block of the corresponding coding block.

When second order prediction is to be performed on at least one sub-block of the coding block, similarly to step 11, sub_sop_flag is generated for each sub-block of the coding block according to a rule or generated adaptively. If the value of sub_sop_flag is 0, it indicates that the corresponding sub-block does not use second order prediction for reconstruction; if the value of sub_sop_flag is 1, it indicates that the corresponding sub-block uses second order prediction for reconstruction.

When sub_sop_flag is generated adaptively, considering changes between images, adaptation generally causes inaccuracy of the information. Specifically, sub_sop_flag may be generated for the first frame in intra-frame coding according to a rule, and then transmitted to the decoding end. sub_sop_flag may be generated adaptively as follows: for subsequent frames, sub_sop_flag of the current sub-block is directly obtained according to the value of sub_sop_flag of the coded block of a reference frame corresponding to a motion vector, which enables flexible coding. In addition, a new syntax element is added in slice header information, indicating whether adaptation is used during current frame coding. If adaptation is used, sub_sop_flag of the current sub-block is directly obtained according to the value of sub_sop_flag of the decoded block of the reference frame corresponding to a motion vector; if adaptation is not used, sub_sop_flag is generated according to a rule. The method for obtaining sub_sop_flag adaptively is not limited thereto.

Step 13: Perform prediction according to sop_flag of the coding block and at least one sub_sop_flag of the coding block to obtain a prediction image.

Step 14: Obtain a prediction residual according to the prediction image, and code the prediction residual.

In this embodiment, corresponding pred_sp_mode_flag is generated for the sub-block of the coding block, on which second order prediction is performed.

For example, pre_sp_mode_flag is generated according to a rule for the sub-block on which second order prediction is performed. When the value of pred_sp_mode_flag is 0, rem_sp_mode also needs to be generated so that the decoding end performs, according to the generated rem_sp_mode, decoding and reconstruction using second order prediction.

Entropy coding is performed on pred_sp_mode_flag and then the coded pred_sp_mode_flag is written into a bit stream.

When the value of pred_sp_mode_flag is 1, only pred_sp_mode_flag needs to be entropy-coded and written into a bit stream, and then transmitted to the decoding end. The decoding end generates rem_sp_mode adaptively according to pre_sp_mode_flag. When the value of pred_sp_mode_flag is 0, rem_sp_mode also needs to be entropy-coded and written into a bit stream, and then transmitted to the decoding end. The decoding end performs, according to the received rem_sp_mode, decoding and reconstruction using second order prediction.

According to the technical solution in this embodiment, the unit identified by sop_flag for second order prediction is refined to the sub-block level in a way of identifying the sub-block of the coding block by using sub_sop_flag. To be specific, the size of the block on which second order prediction is performed is reduced or appropriately combined to bring advantages of the second order prediction technology into full play so that the coding efficiency when all of the sub-blocks of the current coding block do not use second order prediction is higher than that when all sub-blocks of the coding block use second order prediction, or higher than that when none of the sub-blocks of the coding block use second order prediction. According to the technical solution in this embodiment, the unit of the coding block identified by the second order prediction flag for second order prediction is refined to the sub-block level, i.e., the unit of the coding block identified by the second order prediction flag for second order prediction is refined, which may enhance the flexibility of second order prediction and improve the coding and decoding efficiency.

When sop_flag is generated according to a rule and needs to be transmitted to the decoding end, the video coding method according to the embodiment of the present invention may further include: performing entropy coding for sop_flag and sub_sop_flag and writing the coded sop_flag and sub_sop_flag into a bit stream.

When sop_flag and sub_sop_flag are generated adaptively and do not need to be transmitted to the decoding end, the video coding method according to the embodiment of the present invention may further include:

adding a syntax element, which is used to indicating whether adaptation is used during current frame coding, in slice header information of the bit stream.

When the sub-block of the coding block further includes multiple sub-blocks, for ease of description, the sub-blocks of the coding block are referred to as first-level sub-blocks, the sub-blocks of the first-level sub-block are referred to as second-level sub-blocks, the sub-blocks of the second-level sub-block are referred to as third-level sub-blocks, and so on. When the value of sub_sop_flag is 0, it indicates that second order prediction is performed for none of the second-level sub-blocks of the corresponding first-level sub-block; when the value of sub_sop_flag is 1, it indicates that second order prediction is performed for all second-level sub-blocks of the corresponding first-level sub-block. In this case, the generating corresponding pred_sp_mode_flag and rem_sp_mode for the first-level sub-block of the coding block, on which second order prediction is performed, may include:

in the first-level sub-block, on which second order prediction is performed, generating a second sub second order prediction flag (Second Sub Second Order Prediction Flag, second_sub_sop_flag) for each second-level sub-block, where second_sub_sop_flag is used to indicate whether second order prediction is performed for the corresponding second-level sub-block; and

generating corresponding pred_sp_mode_flag or further generating rem_sp_mode for the second-level sub-block on which second order prediction is performed.

second_sub_sop_flag may be generated adaptively or generated according to a rule.

When second_sub_sop_flag is generated adaptively, it does not need to be transmitted to the decoding end. The decoding end also generates second_sub_sop_flag adaptively.

When second_sub_sop_flag needs to be transmitted to the decoding end, the video coding method according to the embodiment of the present invention may further include: performing entropy coding on second_sub_sop_flag and then writing the coded second_sub_sop_flag into the bit stream.

When the size of the coding block is 64 x 64 or 128 x 128, and so on, the coding block may be divided into third-level sub-blocks, fourth-level sub-blocks, or even more refined sub-blocks. Similarly to the process of coding sub_sop_flag and second_sub_sop_flag, sop_flag may be refined to the third sub second order prediction flag (Third Sub Second Order Prediction Flag, Third_sub_sop_flag), or the fourth sub second order prediction flag (Fourth Sub Second Order Prediction Flag, Fourth_sub_sop_flag), and so on, to identify whether second order prediction is performed on a smaller unit, which further meets requirements for the flexibility of second order prediction and improves the coding efficiency.

Corresponding to the first embodiment, FIG. 2 is a flowchart of a video decoding method according to a second embodiment of the present invention. The method includes the following steps:

Step 21: Obtain sop_flag of a decoding block.

When a bit stream sent by a coding end is received and the bit stream includes sop_flag, sop_flag may be parsed from the bit stream; when the bit stream does not include sop_flag, a syntax element used to indicate whether adaptation is used during current frame coding may be parsed from slice header information of the bit stream. When adaptation is used during current frame coding, sop_flag may be obtained adaptively.

Step 22: When sop_flag of the decoding block indicates that the decoding block needs second order prediction, obtain sop_flag of at least one sub-block of the decoding block (at least one sub_sop_flag).

When the bit stream includes sub_sop_flag, sub_sop_flag may be parsed from the bit stream; when the bit stream does not include sub_sop_flag, a syntax element used to indicate whether adaptation is used during current frame coding may be parsed from slice header information of the bit stream. When adaptation is used during current frame coding, sub_sop_flag may be obtained adaptively. For example, sub_sop_flag of the current sub-block is directly obtained according to the value of sub_sop_flag of the decoded block of the reference frame corresponding to a motion vector. For details about sub_sop_flag, reference can be made to the description in step 12.

Step 23: Perform prediction according to sop_flag of the decoding block and at least one sub_sop_flag of the decoding block to obtain a prediction image.

In this embodiment, for the first-level sub-block of the decoding block, on which second order prediction is performed, the corresponding pre_sp_mode_flag of is parsed from the bit stream, and decoding and reconstruction using second order prediction are performed. When the value of pred_sp_mode_flag is 0, rem_sp_mode needs to be further parsed.

According to the technical solution in this embodiment, the unit for second order prediction is refined to the sub-block level by obtaining sub_sop_flag identifying the first-level sub-block of the decoding block. To be specific, the size of the block on which second order prediction is performed is reduced or appropriately combined so that advantages of the second order prediction technology are brought into full play, which meets the requirements for different coding efficiencies.

When the first-level sub-block is divided into multiple second-level sub-blocks, in step 24, that for the first-level sub-block of the decoding block, on which second order prediction is performed, the corresponding pred_sp_mode_flag is parsed from the bit stream includes:

obtaining second_sub_sop_flag of each second-level sub-block of the first-level sub-block on which second order prediction is performed, where the second_sub_sop_flag is used to indicate whether second order prediction is performed for the corresponding second-level sub-block; and

for the second-level sub-block on which second order prediction is performed, parsing the corresponding pred_sp_mode_flag from the bit stream.

When the size of the decoding block is 64 x 64 or 128 x 128, and so on, the coding block may be divided into third-level sub-blocks, fourth-level sub-blocks, or even more refined sub-blocks. Similarly to the process of decoding sub_sop_flag and second_sub_sop_flag, sop_flag may be refined to the third sub second order prediction flag (Third Sub Second Order Prediction Flag, Third_sub_sop_flag), or the fourth sub second order prediction flag (Fourth Sub Second Order Prediction Flag, Fourth_sub_sop_flag), and so on, to identify whether second order prediction is performed for a smaller unit, which further meets requirements for the flexibility of second order prediction.

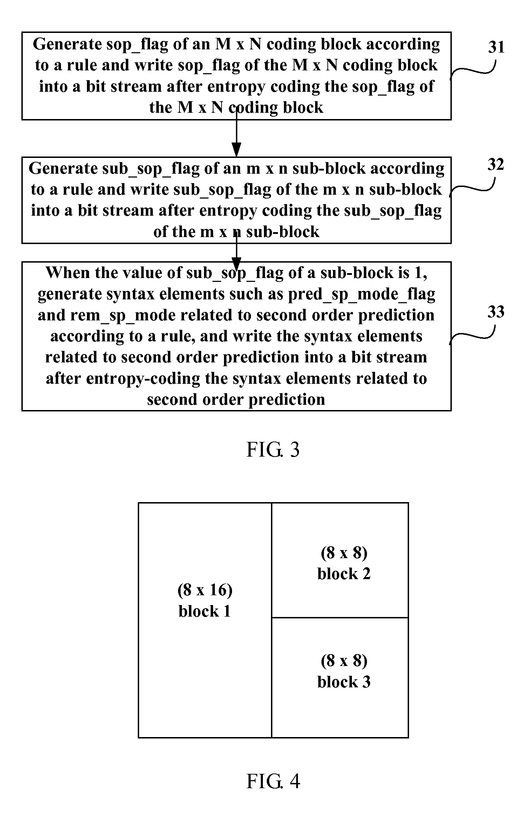

FIG. 3 is a flowchart of a video coding method according to a third embodiment of the present invention. The method includes the following steps:

Step 31: Generate M x N sop_flag, that is, sop_flag of a coding block of a size of M x N (hereinafter referred to as an M x N coding block) according to a rule, which may be but not limited to a rate distortion optimization (Rate Distortion Optimization, RDO) criterion, and write sop_flag of the M x N coding block into a bit stream after entropy coding the sop_flag of the M x N coding block. sop_flag of the M x N coding block is used to indicate whether second order prediction is performed on the M x N coding block and its m x n sub-blocks, where $m \leq M$, $n \leq N$, and the m x n sub-blocks belong to the current M x N coding block.

Step 32: Similarly to step 31, generate sub_sop_flag of the m x n sub-blocks according to a rule, which may be but not limited to an RDO criterion, and write sub_sop_flag of the m x n sub-blocks into a bit stream after entropy coding the sub_sop_flag of the m x n sub-blocks.

If the value of sop_flag of the M x N macroblock is 0, it indicates that second order prediction is performed on none of the m x n sub-blocks of the M x N coding block. In this case, syntax elements related to second order prediction, such as sub_sop_flag, pred_sp_mode_flag, and rem_sp_mode, neither need to be generated nor need to be entropy-coded and written into a bit stream.

If the value of sop_flag of the M x N coding block is 1, it indicates that second order prediction is performed for at least one m x n sub-block of the M x N coding block. In this case, the block may be divided according to the block corresponding to the first order intra-frame prediction mode of the M x N coding block. sub_sop_flag is generated for each m x n sub-block according to a rule, which may be but not limited to an RDO criterion, and written into a bit stream after being entropy coded.

For example, in the block division structure obtained according to the first order prediction mode as shown in FIG. 4, the size of the second order prediction block is 8 x 8. This embodiment, not limited to this block division mode, may cover other block division structures, and the size of the second order prediction block is not limited to this size. sop_flag corresponds to a block of a size of 16 x 16, i.e., a macroblock. However, in first order prediction mode, the 16 x 16 macroblock is divided into one left 8 x 16 block and two right 8 x 8 blocks. To be specific, the macroblock is divided into three sub-blocks, sub-blocks 1, 2, and 3. If the value of sop_flag is 1, sub_sop_flag used to indicate whether second order prediction is performed on all second order prediction blocks of the corresponding sub-block is generated for each of the three sub-blocks according to a rule, which may be but not limited to an RDO criterion, and sub_sop_flag of sub-blocks 1, 2, and 3 is written into a bit stream after being entropy coded.

Step 33: When the value of sub_sop_flag of a sub-block is 1, generate syntax elements such as pred_sp_mode_flag and rem_sp_mode related to second order prediction according to a rule, which may be but not limited to an RDO criterion, and write the syntax elements related to second order prediction into a bit stream after entropy coding the syntax elements related to second order prediction. For example, with regard to the 8 x 16 sub-block 1 as shown in FIG. 4, if the value of sub_sop_flag of the sub-block 1 is 1, a group of pred_sp_mode_flag and rem_sp_mode are generated for the sub-block 1 according to a rule, which may be but not limited to an RDO criterion, and written into a bit stream after being entropy coded. In addition, the sub-block 1 is coded by using the second order prediction technology. Reconstruction using second order prediction is performed on all second order prediction blocks of the sub-block 1 by using the same second order prediction mode rem_sp_mode. Similarly, the decoding end also uses the same rem_sp_mode to perform decoding and reconstruction using second order prediction.

When the value of sub_sop_flag of a sub-block is 0, decoding and reconstruction using second order prediction are performed for none of the second order prediction blocks of the sub-block.

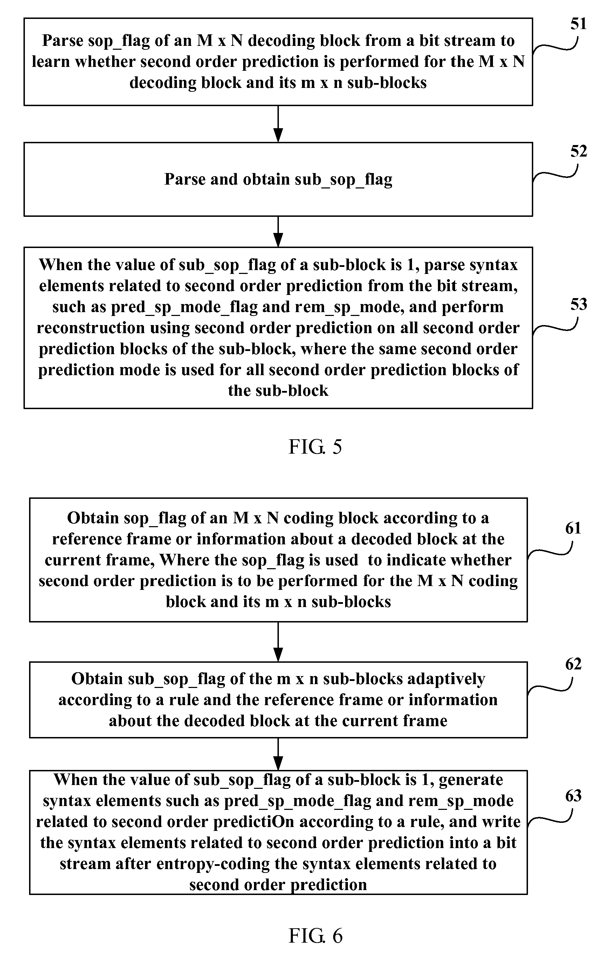

Corresponding to the third embodiment, FIG. 5 is a flowchart of a video decoding method according to a fourth embodiment of the present invention. The decoding method at the decoding end includes the following steps:

Step 51: Parse sop_flag of an M x N decoding block from a bit stream to learn whether second order prediction is performed on the M x N decoding block and its m x n sub-blocks, where $m \leq M$, $n \leq N$, and the m x n sub-blocks belong to the current M x N decoding block.

Step 52: Parse and obtain sub_sop_flag.

Specifically, if the value of sop_flag of the M x N decoding block is 0, it indicates that second order prediction is performed for none of the m x n sub-blocks of the M x N decoding block. In this case, sub_sop_flag and other syntax elements related to second order prediction such as pred_sp_mode_flag and rem_sp_mode do not need to be parsed from the bit stream.

If the value of sop_flag of the M x N decoding block is 1, it indicates that reconstruction using second order prediction is performed on at least one of the m x n sub-blocks of the M x N decoding block. In this case, the block may be divided according to the block corresponding to the first order intra-frame prediction mode of the M x N decoding block. sub_sop_flag is parsed from the bit stream for each m x n sub-block. For example, in a block division structure obtained according to the first order prediction mode as shown in FIG. 4, the size of the second order prediction block is 8 x 8. This embodiment, not limited to this block division mode, may cover other block division structures, and the size of the second order prediction block is not limited to this size. sop_flag corresponds to a block of a size of 16 x 16, i.e., a macroblock. However, in first order prediction mode, the 16 x 16 macroblock is divided into one left $8 \times 16$ block and two right 8 x 8 blocks. To be specific, the macroblock is divided into three sub-blocks, sub-blocks 1, 2, and 3. If the value of sop_flag is 1, sub_sop_flag is parsed from the bit stream for each of the three sub-blocks so as to indicate whether second order prediction is performed on all second order prediction blocks of the corresponding sub-block.

Step 53: When the value of sub_sop_flag of a sub-block is 1, parse syntax elements related to second order prediction from the bit stream, such as pred_sp_mode_flag and rem_sp_mode, and perform reconstruction using second order prediction on all second order prediction blocks of the sub-block. In addition, the same second order prediction mode is used for all second order prediction blocks of the sub-block. For example, with regard to the sub-block 1 of a size of 8 x 16 as shown in FIG. 4, if the value of sub_sop_flag of the sub-block 1 is 1, a group of pred_sp_mode_flag and rem_sp_mode of the 8 x 16 block are parsed from the bit stream, and decoding and reconstruction using second order prediction are performed on all second order prediction blocks and are performed in the same second order prediction mode.

When the value of sub_sop_flag of a sub-block is 0, decoding and reconstruction using second order prediction are performed for none of the second order prediction blocks of the sub-block.

FIG. 6 is a flowchart of a video coding method according to a fifth embodiment of the present invention. The method includes the following steps:

Step 61: Obtain sop_flag of an M x N coding block adaptively according to a rule, which may be but not limited to an RDO criterion, and according to a reference frame or information about a decoded block at the current frame, where the sop_flag is used to indicate whether second order predication is performed on the M x N coding block and its m x n sub-blocks, where m ≤ M, n ≤ N, and the m x n sub-blocks belong to the current M x N coding block.

Step 62: Similarly to step 61, according to a rule, which may be but not limited to an RDO criterion, obtain sub_sop_flag of the m x n sub-blocks adaptively according to the reference frame or information about the decoded block at the current frame.

If the value of sop_flag of the M x N coding block is 0, it indicates that second order prediction is performed for none of the m x n sub-blocks of the M x N coding block. In this case, sub_sop_flag and other syntax elements related to second order prediction such as pred_sp_mode_flag and rem_sp_mode do not need to be further obtained.

If sop_flag of the M x N coding block is 1, it indicates that second order prediction is performed on at least one of the m x n sub-blocks of the M x N coding block. In this case, the block may be divided according to the block corresponding to the first order intra-frame prediction mode of the M x N coding block. According to a rule, which may be but not limited to an RDO criterion sub_sop_flag is obtained for each m x n sub-block adaptively. For example, in the block division structure obtained according to the first order prediction mode as shown in FIG. 4, the size of the second order prediction block is 8 x 8. This embodiment, not limited to this block division mode, may cover other block division structures, and the size of the second order prediction block is not limited to this size. sop_flag corresponds to a block of a size of 16 x 16, i.e., a macroblock. However, in first order prediction mode, the 16 x 16 macroblock is divided into one left $8 \times 16$ block and two right 8 x 8 blocks. To be specific, the macroblock is divided into three sub-blocks, sub-blocks 1, 2, and 3. If the value of sop_flag is 1, according to a rule, which may be but not limited to an RDO criterion, sub_sop_flag is obtained for each of the three sub-blocks adaptively according to the reference frame or information about the decoded block at the current frame, where the sop_flag is used to indicate whether second order predication is performed on all second order prediction blocks of the corresponding sub-block. The obtaining sub_sop_flag adaptively may specifically include: directly obtaining sub_sop_flag of the current sub-block according to the value of sub_sop_flag of the decoded block of the reference frame corresponding to a motion vector. The method for obtaining sub_sop_flag adaptively is not limited to the above-described method.

Step 63: When the value of sub_sop_flag of a sub-block is 1, generate syntax elements such as pred_sp_mode_flag and rem_sp_mode related to second order prediction according to a rule, which may be but not limited to an RDO criterion, and write the syntax elements related to second order prediction into a bit stream after entropy coding the syntax elements related to second order prediction.

When the value of sub_sop_flag of a sub-block is 0, decoding and reconstruction using second order prediction are performed on none of the second order prediction blocks of the sub-block. For example, with regard to the sub-block 1 of a size of 8 x 16 as shown in FIG. 4, if the value ofsub_sop_flag of the sub-block 1 is 1, a group pf pred_sp_mode_flag and rem_sp_mode are generated for the sub-block 1 according to a rule, which may be but not limited to an RDO criterion, and written into a bit stream after being entropy coded. Second order prediction is performed on the sub-block. Second order prediction is performed on all second order prediction blocks of the sub-block 1 by using the same second order prediction mode rem_sp_mode. Similarly, the decoding end also uses the same rem_sp_mode to perform decoding and reconstruction using second order prediction.

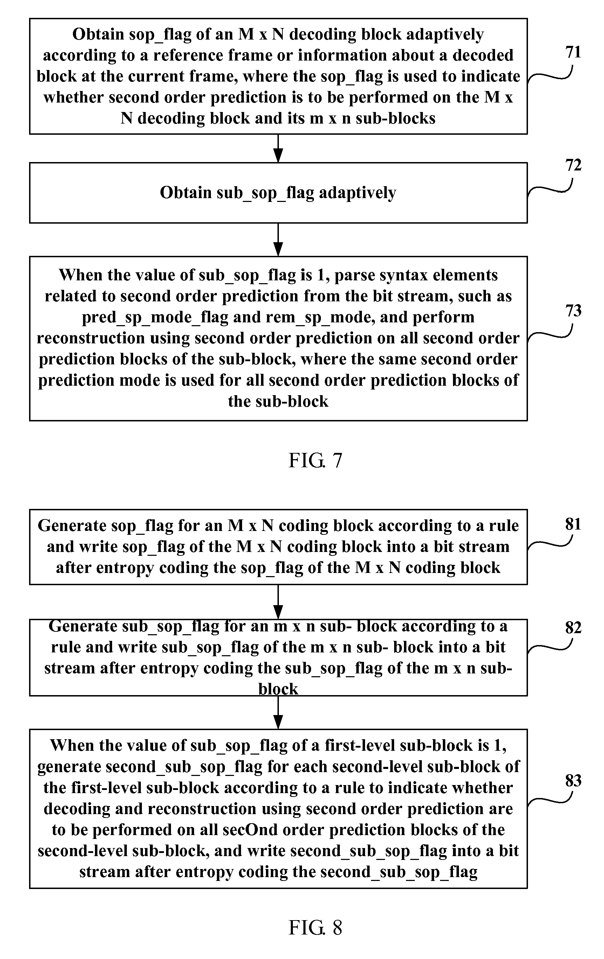

Corresponding to the fifth embodiment, FIG. 7 is a flowchart of a video decoding method according to a sixth embodiment of the present invention. The decoding method at the decoding end includes the following steps:

Step 71: Obtain sop_flag of an M x N decoding block adaptively according to a reference frame or information about a decoded block at the current frame, where the sop_flag is used to indicate whether second order prediction is performed on the M x N decoding block and its m x n sub-blocks, where m ≤ M, n ≤ N, and the m x n sub-blocks belong to the current M x N decoding block.

Step 72: Obtain sub_sop_flag adaptively.

Specifically, if the value of sop_flag of the M x N decoding block is 0, it indicates that second order prediction is performed on none of the m x n sub-blocks of the M x N decoding block. In this case, sub_sop_flag and other syntax elements related to second order prediction such as pred_sp_mode_flag and rem_sp_mode do not need to be further obtained.

If sop_flag of the M x N decoding block is 1, it indicates that second order prediction is performed on at least one of the m x n sub-blocks of the M x N decoding block. In this case, the block may be divided according to the block corresponding to the first order intra-frame prediction mode of the M x N decoding block. sub_sop_flag is obtained for each m x n sub-block adaptively according to the reference frame or information about the decoded block at the current frame. For example, in the block division structure obtained according to the first order prediction mode as shown in FIG. 4, the size of the second order prediction block is 8 x 8. This embodiment, not limited to this block division mode, may cover other block division structures, and the size of the second order prediction block is not limited to this size. sop flag corresponds to a block of a size of 16 x 16, i.e., a macroblock. However, in first order prediction mode, the 16 × 16 macroblock is divided into one left 8 × 16 block and two right 8 x 8 blocks. To be specific, the macroblock is divided into three sub-blocks, sub-blocks 1, 2, and 3. If the value of sop_flag is 1, sub_sop_flag is obtained for each of the three sub-blocks adaptively according to the reference frame or information about the decoded block at the current frame, where the sop_flag is used to indicate whether second order predication is performed on all second order prediction blocks of the corresponding sub-block. The obtaining sub_sop_flag adaptively may specifically include: directly obtaining sub_sop_flag of the current sub-block according to the value of sub_sop_flag of the decoded block of the reference frame corresponding to a motion vector. The method for obtaining sub_sop_flag adaptively is not limited to the above-described method.

Step 73: When the value of sub_sop_flag of a sub-block is 1, parse syntax elements related to second order prediction from the bit stream, such as pred_sp_mode_flag and rem_sp_mode, and perform second order prediction on all second order prediction blocks of the sub-block. In addition, the same second order prediction mode is used for all second order prediction blocks of the sub-block. For example, with regard to the 8 x 16 sub-block 1 as shown in FIG. 4, if the value of sub_sop_flag of the sub-block 1 is 1, a group of pred_sp_mode_flag and rem_sp_mode of the 8 x 16 block are parsed from the bit stream, and decoding and reconstruction using second order prediction are performed on all second order prediction blocks and are performed in the same second order prediction mode.

When the value of sub_sop_flag of a sub-block is 0, decoding and reconstruction using second order prediction are performed for none of the second order prediction blocks of the sub-block.

FIG. 8 is a flowchart of a video coding method according to a seventh embodiment of the present invention. The method includes the following steps:

Step 81: Generate sop_flag for an M x N coding block according to a rule, which may be but not limited to an RDO criterion, and write sop_flag of the M x N coding block into a bit stream after entropy coding the sop_flag of the M x N coding block. sop_flag of the M x N coding block is used to indicate whether second order prediction is performed for the M x N coding block and its m x n sub-blcoks, where m ≤ M, n ≤ N, and the m x n sub-blocks belong to the current M x N coding block.

Step 82: Similarly to step 81, generate sub_sop_flag of the m x n sub-blocks according to a rule, which may be but not limited to an RDO criterion, and write sub_sop_flag of the m x n sub-blocks into a bit stream after entropy coding the sub_sop_flag of the m x n sub-blocks.

Specifically, if the value of sop_flag of the M x N coding block is 0, it indicates that second order prediction is performed on none of the m x n sub-blocks of the M x N coding block. In this case, sub_sop_flag and other syntax elements related to second order prediction such as pred_sp_mode_flag and rem_sp_mode do not need to be written into a bit stream after being entropy coded.

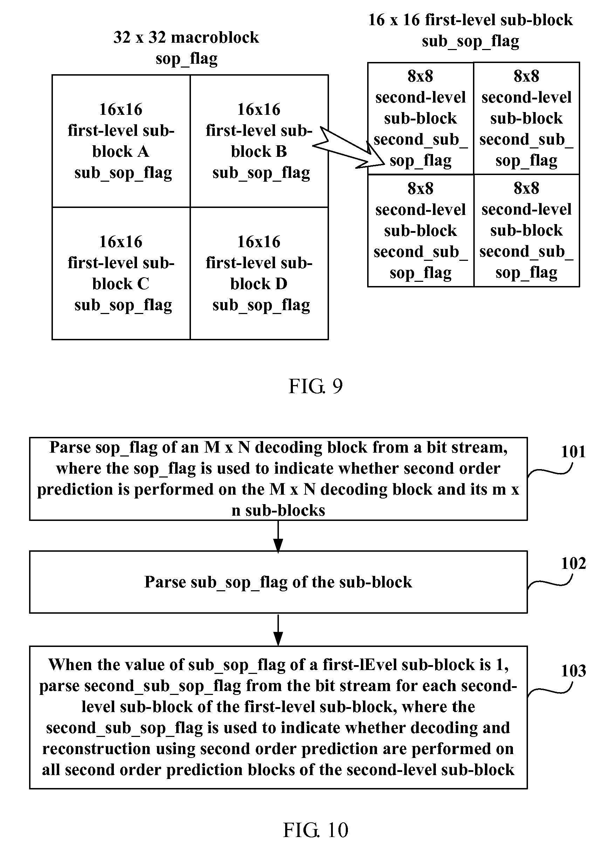

If sop_flag of the M x N coding block is 1, it indicates that second order prediction is performed on at least one of the m x n sub-blocks of the M x N coding block. In this case, the block may be divided according to the block corresponding to the first order intra-frame prediction mode of the M x N coding block. sub_sop_flag is generated for each m x n first-level sub-block according to a rule, which may be but not limited to an RDO (Rate Distortion Optimization) criterion, and written into a bit stream after being entropy coded. For example, in the block division structure obtained according to the first order prediction mode as shown in FIG. 9, the size of the second order prediction block is 8 x 8. This embodiment, not limited to this block division mode, covers other block division structures, and the size of the second order prediction block is not limited to this size. sop_flag corresponds to a macroblock of a size of 32 x 32. In first order prediction mode, the 32 x 32 macroblock is divided into four 16 x 16 first-level sub-blocks, first-level sub-blocks A, B, C, and D. Each first-level sub-block of a size of 16 x 16 is divided into four second-level sub-blocks of a size of 8 x 8. If the value of sop_flag is 1, sub_sop_flag used to indicate whether second order prediction is performed on all second order prediction blocks of the corresponding first-level sub-block is generated for each of the four first-level sub-blocks according to a rule, which may be but not limited to an RDO criterion, and sub_sop_flag is written into a bit stream after being entropy coded.

Step 83: When the value of sub_sop_flag of a first-level sub-block is 1, generate second_sub_sop_flag for each second-level sub-block of the first-level sub-block according to a rule, which may be but not limited to an RDO criterion, where the second sop_flag is used to indicate whether decoding and reconstruction using second order prediction are performed on all second order prediction blocks of the second-level sub-block, and write second_sub_sop_flag into a bit stream after entropy coding the second_sub_sop_flag.

If the value of second_sub_sop_flag of a second-level sub-block is 0, it indicates that second order prediction is performed on none of the second order prediction blocks of the second-level sub-block. In this case, sub_sop_flag and other syntax elements related to second order prediction such as pred_sp_mode_flag and rem_sp_mode do not need to be written into a bit stream after being entropy coded.

If the value of second_sub_sop_flag of a second-level sub-block is 1, it indicates that second order prediction is performed on all second order prediction blocks of the second-level sub-block, and all second order prediction blocks use the same second order prediction mode. In this case, syntax elements related to second order prediction such as pred_sp_mode_flag and rem_sp_mode are generated according to a rule, which may be but not limited to an RDO criterion, and written into a bit stream after being entropy coded.

For example, with regard to the first-level sub-block B of a size of 16 x 16 as shown in FIG. 9, if the value of sub_sop_flag is 1, second_sub_sop_flag is generated for each 8 x 8 second-level sub-block according to a rule, which may be but not limited to an RDO criterion, and written into a bit stream after being entropy coded. If the value of second_sub_sop_flag of an 8 x 8 second-level sub-block is 1, syntax elements related to second order prediction such as pred_sp_mode_flag and rem_sp_mode are generated according to a rule, which may be but not limited to an RDO criterion, and written into a bit stream after being entropy coded. In addition, second order prediction is performed on the second-level sub-block. Second order prediction is performed on all second order prediction blocks of the second-level sub-block using the same second order prediction mode rem_sp_mode. Similarly, the decoding end also uses the same rem_sp_mode to perform decoding and reconstruction using second order prediction.

When the value of sub_sop_flag of a first-level sub-block is 0, decoding and reconstruction using second order prediction are performed on none of the sub-blocks of the first-level sub-block.

Corresponding to the seventh embodiment, FIG. 10 is a flowchart of a video decoding method according to an eighth embodiment of the present invention. The decoding method at the decoding end includes the following steps:

Step 101: Parse sop_flag of an M x N decoding block from a bit stream, where the sop_flag is used to indicate whether second order prediction is performed on the M x N decoding block and its m x n sub-blocks, where $m \leq M$, $n \leq N$, and the m x n sub-blocks belong to the current M x N decoding block.
Step 102: Parse sub_sop_flag of the sub-block.

Specifically, if the value of sop_flag of the M x N decoding block is 0, it indicates that second order prediction is performed for none of the m x n sub-blocks of the M x N decoding block. In this case, sub_sop_flag and other syntax elements related to second order prediction such as pred_sp_mode_flag and rem_sp_mode do not need to be parsed from the bit stream.

If sop_flag of the M x N decoding block is 1, it indicates that second order prediction is performed for at least one of the m x n sub-blocks of the M x N decoding block. In this case, the block may be divided according to the block corresponding to the first order intra-frame prediction mode of the M x N decoding block, and sub_sop_flag is parsed from the bit stream for each m x n first-level sub-block. For example, in the block division structure obtained according to the first order prediction mode as shown in FIG. 9, the size of the second order prediction block is 8 x 8. This embodiment, not limited to this block division mode, covers other block division structures, and the size of the second order prediction block is not limited to this size. sop_flag corresponds to a macroblock of a size of 32 x 32. In first order prediction mode, the 32 x 32 macroblock is divided into four first-level sub-blocks of a size of 16 x 16, which are first-level sub-blocks A, B, C, and D. Each 16 x 16 first-level sub-block is divided into four 8 x 8 second-level sub-blocks. If the value of sop_flag is 1, sub_sop_flag is parsed from the bit stream for each of the four first-level sub-blocks to indicate whether second order prediction is performed on all second order prediction blocks of the corresponding first-level sub-block.

Step 103: When the value of sub_sop_flag of a first-level sub-block is 1, parse second_sub_sop_flag from the bit stream for each second-level sub-block of the first-level sub-block, where the second sop_flag is used to indicate whether decoding and reconstruction using second order prediction are performed on all second order prediction blocks of the second-level sub-block.

If the value of second_sub_sop_flag of a second-level sub-block is 0, it indicates that second order prediction is performed on none of the second order prediction blocks of the second-level sub-block. In this case, sub_sop_flag and other syntax elements related to second order prediction such as pred_sp_mode_flag and rem_sp_mode do not need to be parsed from the bit stream.

If the value of second_sub_sop_flag of a second-level sub-block is 1, it indicates that second order prediction is performed for all second order prediction blocks of the second-level sub-block, and all second order prediction blocks use the same second order prediction mode.

For example, with regard to the first-level sub-block A of a size of 16 x 16 as shown in FIG. 9, if the value ofsub_sop_flag is 1, second_sub_sop_flag is parsed from the bit stream for each 8 x 8 second-level sub-block. If the value of second_sub_sop_flag of an 8 x 8 second-level sub-block is 1, a group of pred_sp_mode_flag and rem_sp_mode of the 8 x 8 second-level sub-block are parsed from the bit stream, and decoding and reconstruction using second order prediction are performed on all second order prediction blocks and are performed in the same second order prediction mode.

When the value of sub_sop_flag of a first-level sub-block is 0, decoding and reconstruction using second order prediction are performed on none of the sub-blocks of the first-level sub-block.

According to the first, third, fifth, seventh, and ninth embodiments, sub_sop_flag may be coded in context adaptive binary arithmetic coding (Context Adaptive Binary Arithmetic Coding, CABAC) mode to ensure that the information coding performance in second order prediction mode can still be improved when a syntax element is added.

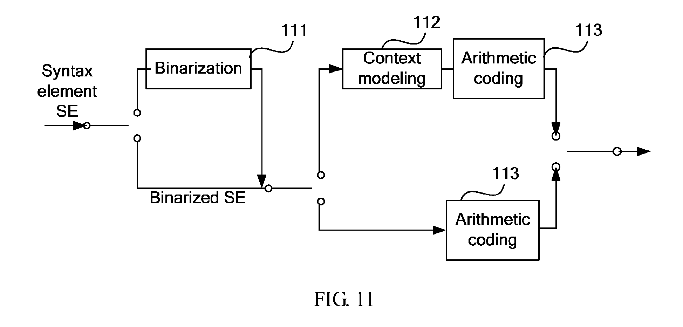

The basic coding process in CABAC mode may involve binarization, context modeling, and binary arithmetic coding. In binarization, values of each non-binary syntax element are converted into binary bit sequences. If the syntax elements are binary, this process is not necessary. In context modeling, each bit of the bit sequences of binarized syntax elements is provided with a probability model for probability prediction. In some cases, a previously coded syntax element or bit sequence may be needed. CABAC involves two coding modes, regular coding mode (regular coding mode) and bypass coding mode. The regular coding mode uses context modeling, whereas, to increase the coding speed, the bypass coding mode does not use context modeling. FIG. 11 illustrates the coding process.

Step 111: Perform binarization. To reduce the complexity of arithmetic coding and increase the coding speed, CABAC uses binary arithmetic coding rather than multi-decimal arithmetic coding. Therefore, each syntax element needs to be converted into a unique binary sequence which is referred to as a bin string (bin sting) in H.264. Meanwhile, the size of the binary sequence needs to be reduced so as to reduce the coding complexity in subsequent arithmetic coding. CABAC uses four basic binary conversion modes.

Step 112: Perform context modeling. Before arithmetic coding, context modeling must be performed. Context modeling is to establish a probability model and predict the value and probability of each bit to be coded. In H.264, 399 context models are defined, which may be classified into four types. The first type of model needs to be established according to its neighboring coded syntax element, and generally, a corresponding probability model is established by using its left and upper syntax elements to perform probability prediction for a current syntax element. The second type of model is only used for macroblocks and sub-macroblocks. The probability model for the $N^{th}$ bit is selected by referring to the model used by the previously coded N - 1 bit. The third and fourth types of models are only used for coding the residual data. These two types of models depend on the type of the coding block. The third type of model does not depend on coded data but the location of the data in a scanning path. The fourth type of model calculates the number of levels that are coded before the level of the bit. In H.264, in addition to these conditional probability models, other fixed probability models are defined, which provide fixed probability prediction for the bit to be coded and do not vary according to previously coded bits.

Step 113: Perform binary arithmetic coding. In CABAC, the value 0 or 1 of each bit to be coded is represented by the most probable symbol (most probable symbol, MPS) or the least probable symbol (least probable symbol, LPS). The MPS indicates the most probable state, corresponding to the value 0 or 1 that has a larger probability. The LPS indicates the least probable state, corresponding to the value 0 or 1 that has a smaller probability. Therefore, only one variable is needed to store the probability of the LPS. Meanwhile, the variable quantizes the probability into 64 grades, each of which is uniquely defined by its corresponding index $\sigma$. Thus, in CABAC, each context model may be uniquely determined by two variables.

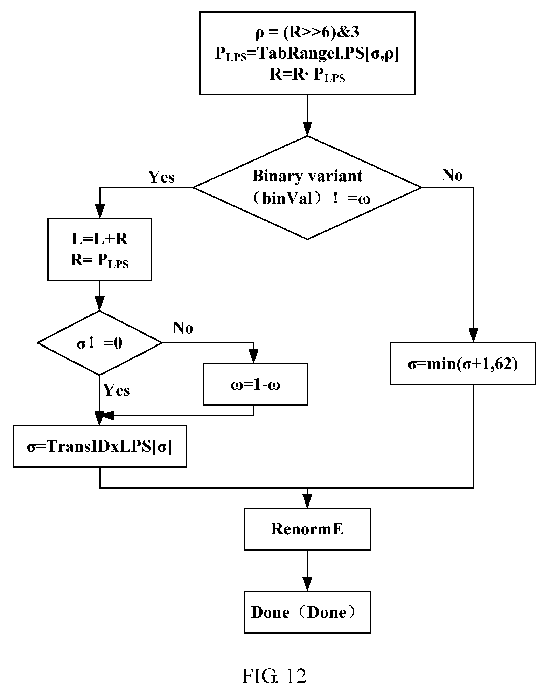

FIG. 12 illustrates a flowchart of arithmetic coding in CABAC. The probability model of CABAC effectively reduces the calculation workload during probability estimation and refreshing. In CABAC, a 4 x 64 two-dimensional table is first established, storing a multiplication result calculated in advance. With no doubt, input parameters in one column of the table are from Px, and input parameters in the other column of the table are from R. Px may directly use $\sigma$ as a parameter, and the quantization formula of R is as follows:

$$\rho = (R >> 6) \& 3$$

In the formula, R indicates the size of a current range, $\rho$ indicates the result of R, >> indicates right shift of bits, and & indicates a bit-wise "AND" operation.

Each time when the multiply operation is performed, the result may be obtained by querying the table using $\rho$ and $\sigma$. After the probability model and multiplication model are established, in a progressive calculation process, CABAC needs to save the record state of the variable, including: lower threshold L of the current range, size R of the current range, current MPS character, and probability index $\sigma$ of the LPS.

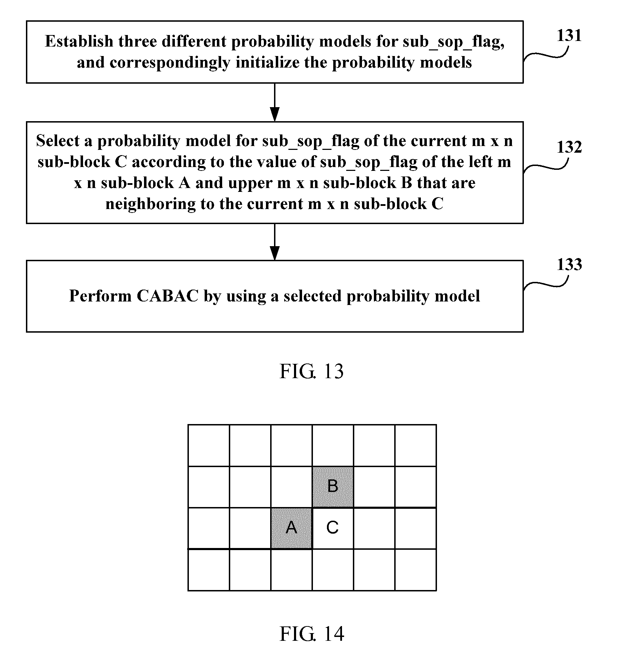

FIG. 13 is a flowchart of a coding method for syntax element sub_sop_flag of an m x n sub-block in the coding method according to an embodiment of the present invention. For example, in the sub-blocks A, B, and C as shown in FIG. 14, coding of the syntax element sub_sop_flag of the m x n sub-block includes the following steps:

Step 131: Establish three different probability models for sub_sop_flag, and correspondingly initialize the probability models. Assume that 0, 1, and 2 denote the three probability models.

Step 132: Select a probability model for sub_sop_flag of the current m x n sub-block C according to the value of sub_sop_flag of the left m x n sub-block A and upper m x n sub-block B that are neighboring to the current m x n sub-block C. The formula for selecting the probability model is as follows:

$$\text{Context\_sub\_sop\_flag(C)} = \text{sub\_sop\_flag(A)} + \text{sub\_sop\_flag(B)}$$

Context_sub_sop_flag(C) indicates the probability model of the arithmetic coding and decoding to be used by the current m x n sub-block C. sub_sop_flag(x) indicates the value of sub_sop_flag of the m x n sub-block x. If the m x n sub-block x is unavailable, sub_sop_flag(x) = 0. If the values of sub_sop_flag of the sub-blocks A and sub-blocks B are 0, the probability model 0 is selected. If the value of sub_sop_flag of the sub-block A is 0 and the value of sub_sop_flag of the sub-block B is 1, the probability model 1 is selected. If the values of sub_sop_flag of the sub-blocks A and sub-blocks B are 1, the probability model 2 is selected.

Step 133: Perform CABAC by using a selected probability model. CABAC uses high-efficiency arithmetic coding and meanwhile takes the video stream-specific statistical performance into full consideration, therefore greatly improving the coding efficiency.

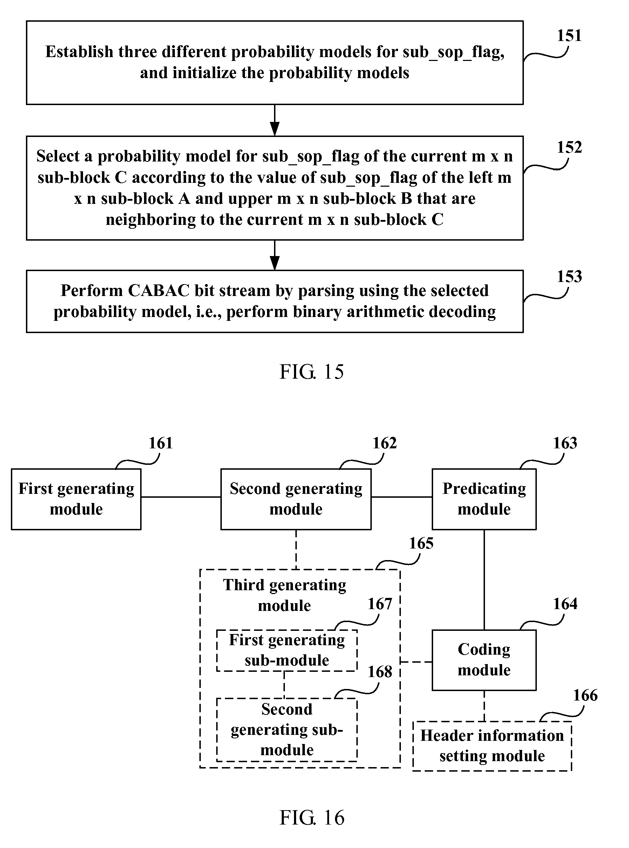

Correspondingly, FIG. 15 is a flowchart of a decoding method for syntax element sub_sop_flag of an m x n sub-block in the video decoding method according to an embodiment of the present invention. The decoding processing includes the following steps:

Step 151: Establish three different probability models for sub_sop_flag, and initialize the probability models. Assume that 0, 1, 2, and 3 denote the three probability models.

Step 152: Select a probability model for sub_sop_flag of the current m x n sub-block C according to the value of sub_sop_flag of the left m x n sub-block A and upper m x n sub-block B that are neighboring to the current m x n sub-block C. The formula for selecting the probability model is as follows:

$$\text{Context\_sub\_sop\_flag(C)} = 2 \times \text{sub\_sop\_flag(A)} + \text{sub\_sop\_flag(B)}$$

Context_sub_sop_flag(C) indicates the probability model of the arithmetic coding and decoding to be used by the current m x n sub-block C. sub_sop_flag(x) indicates the value of sub_sop_flag of the m x n sub-block x. If the m x n sub-block x is unavailable, sub_sop_flag(x) = 0. If the values of sub_sop_flag of the sub-blocks A and sub-blocks B are 0, the probability model 0 is selected. If the value of sub_sop_flag of the sub-block A is 0 and the value of sub_sop_flag of the sub-block B is 1, or the value of sub_sop_flag of the sub-block A is 1 and the value of sub_sop_flag of the sub-block B is 0, the probability model 1 is selected. If the values of sub_sop_flag of the sub-blocks A and sub-blocks B are 1, the probability model 2 is selected.

Step 153: Perform CABAC bit stream parsing by using the selected probability model, i.e., perform binary arithmetic decoding, to obtain a binary value (bin), and directly assign the bin value to sub_sop_flag.

FIG. 16 is a schematic structural diagram of a video coding apparatus according to an embodiment of the present invention. The coding apparatus includes: a first generating module 161, a second generating module 162, a predicating module 163, and a coding module 164. The first generating module 161 is configured to generate sop_flag for a coding block. For example, the first generating module 161 obtains sop_flag of the coding block adaptively. For the details, reference can be made to the description in step 11 in the method embodiment. The second generating module 162 is configured to generate sop_flag for at least one sub-block of the coding block, i.e., sub_sop_flag, when the coding block needs second order prediction, where sub_sop_flag is used to indicate whether second order prediction is performed on the sub-block. For example, the second generating module 162 obtains sub_sop_flag of each sub-block of the coding block adaptively. For the details, reference can be made to the description in step 12 in the method embodiment. The predicating module 163 is configured to perform prediction according to sop_flag of the coding block and at least one sub_sop_flag of the coding block to obtain a prediction image. The coding module 164 is configured to obtain a prediction residual according to the prediction image, and code the prediction residual.

The video coding apparatus provided in the embodiment of the present invention may further include: a third generating module 165, configured to generate corresponding pred_sp_mode_flag for the sub-block of the coding block, on which second order prediction is performed. For the details, reference can be made to the description in the method embodiments. In this case, the coding module 164 may be further configured to perform entropy coding on pred_sp_mode_flag, and then write the coded pred_sp_mode_flag into a bit stream. When sop_flag and sub_sop_flag need to be transmitted to the decoding end, the coding module 164 is further configured to perform entropy coding on sop_flag and sub_sop_flag and then write the coded sop_flag and sub_sop_flag into a bit stream. During the entropy coding for sub_sop_flag, the coding module 164 may be specifically configured to perform CABAC.

According to the video coding apparatus in this embodiment, the unit identified by sop_flag for second order prediction is refined to the sub-block level in a way of identifying the sub-block of the coding block by using sub_sop_flag. To be specific, the size of the block on which second order prediction is performed is reduced or appropriately combined to bring advantages of the second order prediction technology into full play so that the coding efficiency when all of the sub-blocks of the current coding block do not use second order prediction is higher than that when all sub-blocks of the coding block use second order prediction, or higher than that when none of the sub-blocks of the coding block use second order prediction.

When sop_flag and sub_sop_flag do not need to be transmitted to the decoding end, the video coding apparatus provided in the embodiment of the present invention may further include a header information setting module 166. The header information setting module 166 is configured to add a syntax element used to indicate whether adaptation is used during current frame coding in slice header information of the bit stream so that the decoding end can determine according to the syntax element whether to parse sop_flag and sub_sop_flag from the bit stream or obtain sop_flag and sub_sop_flag adaptively.

When the sub-block on which second order prediction is performed is divided into multiple second-level sub-blocks, the third generating module 165 may include a first generating sub-module 167 and a second generating sub-module 168. For the details about the second-level sub-blocks, reference can be made to the description in the method embodiments.

The first generating sub-module 167 is configured to generate second_sub_sop_flag for each second-level sub-block of the first-level sub-block on which second order prediction is performed, where second_sub_sop_flag is used to indicate whether second order prediction is performed on the corresponding second-level sub-block. The second generating module 168 is configured to generate corresponding pred_sp_mode_flag for the second-level sub-block on which second order prediction is performed.

In this case, the coding module 164 is further configured to perform entropy coding on second_sub_sop_flag, and then write the coded second_sub_sop_flag into the bit stream.

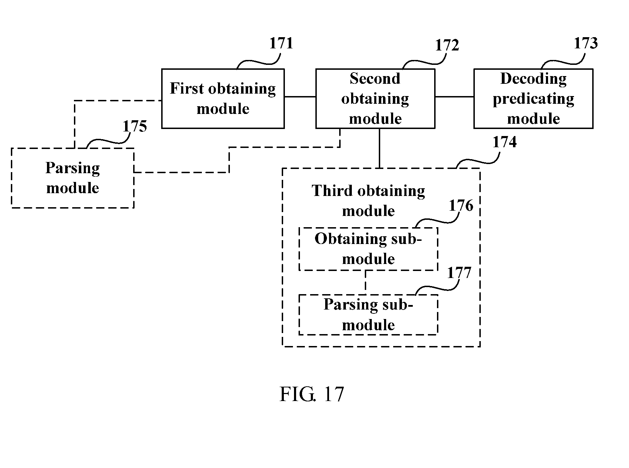

FIG. 17 is a schematic structural diagram of a video decoding apparatus according to an embodiment of the present invention. The video decoding apparatus includes: a first obtaining module 171, a second obtaining module 172, and a decoding predicating module 173. The first obtaining module 171 is configured to obtain sop_flag of a decoding block. For example, the first obtaining module 171 is specifically configured to parse sop_flag of the decoding block from a bit stream. For the details, reference can be made to the description in step 21 in the method embodiment. The second obtaining module 172 is configured to obtain sop_flag of at least one sub-block of the decoding block, i.e., sub_sop_flag, when sop_flag of the decoding block indicates that the decoding block needs second order prediction. For example, the second obtaining module 172 is specifically configured to parse sub_sop_flag of each sub-block of the decoding block from the bit stream. Specifically, the second obtaining module 172 may be configured to parse sub_sop_flag of each sub-block of the decoding block from the bit stream by using context-based adaptive binary arithmetic decoding. The sub_sop_flag is used to indicate whether second order prediction is performed on the corresponding sub-block. For the details, reference can be made to the description in step 22 in the method embodiment. The decoding predicating module 173 is configured to perform prediction according to sop_flag of the decoding block and sub_sop_flag of the at least one sub-block of the decoding block to obtain a prediction image.

The video decoding apparatus provided in the embodiment of the present invention may further include: a third obtaining module 174, configured to parse from the bit stream the corresponding pred_sp_mode_flag for the sub-block of the decoding block, on which second order prediction is performed, where the pred_sp_mode_flag is used to perform second order prediction. For the details, reference can be made to the description of the method embodiments.

The video decoding apparatus provided in the embodiment of the present invention may further include a parsing module 175, configured to parse, from slice header information of the bit stream, a syntax element used to indicate whether adaptation is used during current frame coding. When adaptation is used during the current frame coding, the first obtaining module 171 is specifically configured to obtain sop_flag of the decoding block adaptively; and the second obtaining module 172 is specifically configured to obtain each sub_sop_flag of the decoding block adaptively.

When a first-level sub-block (for the details, reference can be made to the description in the method embodiments) is divided into multiple second-level sub-blocks, the third obtaining module 174 may include: an obtaining sub-module 176 and a parsing sub-module 177. The obtaining sub-module 176 is configured to obtain second_sub_sop_flag of each second-level sub-block of the first-level sub-block on which second order prediction is performed, where second_sub_sop_flag is used to indicate whether second order prediction is performed on the corresponding second-level sub-block. The parsing sub-module 177 is configured to parse from the bit stream the corresponding pred_sp_mode_flag for the second-level sub-block on which second order prediction is performed.

In this embodiment, the video decoding apparatus using second order prediction refines the unit for second order prediction to the sub-block by obtaining sub_sop_flag identifying the first-level sub-block of the decoding block. To be specific, the size of the block on which second order prediction is performed is reduced or appropriately combined to bring advantages of the second order prediction technology into full play so that the objects of second order prediction are more diversified, meeting the requirements for different coding efficiencies.

According to the technical solution in this embodiment, the unit identified by the second order prediction flag for second order prediction is refined to the sub-block level, i.e., the unit of the coding block identified by the second order prediction flag for second order prediction is refined, which may enhance the flexibility of second order prediction and improve the coding and decoding efficiency.

Persons skilled in the art may understand that all or part of steps according to the method embodiments may be implemented by a program instructing relevant hardware. The program may be stored in a computer readable storage medium. When the program is executed, the steps of the method in the embodiments are executed. The storage medium may be any medium that can store program codes, such as a ROM, a RAM, a magnetic disk, a CD-ROM.

Finally, it should be noted that the above embodiments are intended to describe the technical solution of the present invention only. The technical solution of the present invention is not limited thereto. Although the present invention is described in detail by referring to the exemplary embodiments, persons skilled in the art should understand that various modifications to the technical solution disclosed in the above embodiments or equivalent replacements for some technical features contained therein may be made according to the embodiments of the present invention.

**Claims**

1. A video coding method, comprising:

    generating a second order prediction flag, sop_flag, for a coding block;
    when the value of sop_flag indicates that the coding block needs second order prediction, generating a sub second order prediction flag, sub_sop_flag for at least one sub-block of the coding block, wherein the sub second order prediction flag of the sub-block is configured to indicate whether second order prediction is performed on the sub-block;
    performing second order intra-frame prediction according to the second order prediction flag of the coding block and the sub second order prediction flag of the at least one sub-block of the coding block to obtain a prediction image;
    obtaining a prediction residual according to the prediction image, and coding the prediction residual; and

performing entropy coding on the second order prediction flag of the coding block and the sub second order prediction flag of the sub-block of the coding block, writing coded flags into a bit stream, and sending the bit stream to a decoding end;

wherein if the value of sop_flag is 1, it indicates that second order prediction is performed on at least one sub-block of the coding block; and wherein if the value of sub_sop_flag is 0, it indicates that no second order prediction is performed on the corresponding sub-block of the coding block; if the value of sub_sop_flag is 1, it indicates that second order prediction is performed on the corresponding sub-block of the coding block;

wherein the coding block is a macroblock, and the size of the macroblock comprises 16 x 16, and the sub-block of the coding block is a sub-block of the macroblock, and the size of said sub-block of the macroblock comprises 8 x 16 or 8 x 8,

further comprising:

generating, for the sub-block of the coding block, on which second order prediction is performed, a corresponding prediction second prediction mode flag, pred_sp_mode_flag, which is used to perform second order prediction, wherein the pred_sp_mode_flag indicates whether a predicted mode is used as the second order intra-frame prediction mode.

2. A video decoding method, comprising:

obtaining a second order prediction flag, sop_flag of a decoding block, wherein the sop_flag is parsed from a bit stream;

obtaining a sub second order prediction flag, sub_sop_flag of at least one sub-block of the decoding block when the second order prediction flag of the decoding block indicates that the decoding block needs second order prediction, wherein the sub_sop_flag is parsed from the bit stream;

performing second order intra-frame prediction according to the second order prediction flag of the decoding block and the sub second order prediction flag of the at least one sub-block of the decoding block to obtain a prediction image; and

wherein if the value of sop_flag is 1, it indicates that second order prediction is performed on at least one sub-block of the decoding block; and wherein if the value of sub_sop_flag is 0, it indicates that no second order prediction is performed on the corresponding sub-block of the decoding block; if the value of sub_sop_flag is 1, it indicates that second order prediction is performed on the corresponding sub-block of the decoding block;

wherein the decoding block is a macroblock , and the size of the macroblock comprises 16 x 16, and the sub-block of the decoding block is a sub-block of the macroblock, and the size of said sub-block of the macroblock comprises 8 x 16 or 8 x 8,

further comprising:

for the sub-block of the decoding block, on which second order prediction is performed, parsing a corresponding prediction second prediction mode flag, pred_sp_mode_flag from a bit stream, which is used to perform second order prediction, wherein the pred_sp_mode_flag indicates whether a predicted mode is used as the second order intra-frame prediction mode.

3. A video coding apparatus, comprising:

a first generating module, configured to generate a second order prediction flag, sop_flag for a coding block;

a second generating module, configured to generate a sub second order prediction flag, sub_sop_flag, for at least one sub-block of the coding block when the value of sop_flag indicates that the coding block needs second order prediction, wherein the sub second order prediction flag of the sub-block is used to indicate whether second order prediction is performed on the sub-block;

a predicating module, configured to perform second order intra-frame prediction according to the second order prediction flag of the coding block and the sub second order prediction flag of the at least one sub-block of the coding block to obtain a prediction image;

a coding module, configured to obtain a prediction residual according to the prediction image, and code the prediction residual; and

the coding module is further configured to perform entropy coding on the second order prediction flag of the coding block and the sub second order prediction flag of the sub-block, and write coded flags into a bit stream;

wherein if the value of sop_flag is 1, it indicates that second order prediction is performed on at least one sub-block of the decoding block; and wherein if the value of sub_sop_flag is 0, it indicates that no second order prediction is performed on the corresponding sub-block of the decoding block; if the value of sub_sop_flag is 1, it indicates that second order prediction is performed on the corresponding sub-block of the decoding block; wherein the decoding block is a macroblock, and the size of the macroblock comprises 16 x 16, and the sub-block of the decoding block is a sub-block of the macroblock, and the size of said sub-block of the macroblock comprises 8 x 16 or 8 x 8,

further comprising:

a third generating module, configured to generate, for the sub-block of the coding block, on which second order prediction is performed, a corresponding prediction second prediction mode flag, pred_sp_mode_flag which is used to perform second order prediction, wherein the pred_sp_mode_flag indicates whether a predicted mode is used as the second order intra-frame prediction mode.

4. A video decoding apparatus, comprising:

a first obtaining module, configured to obtain a second order prediction flag, sop_flag of a decoding block, wherein the sop_flag is parsed from a bit stream;
a second obtaining module, configured to obtain a sub second order prediction flag, sub_sop_flag of at least one sub-block of the decoding block when the second order prediction flag of the decoding block indicates that the decoding block needs second order prediction, wherein the sub_sop_flag is parsed from the bit stream;
a decoding predicating module, configured to perform second order intra-frame prediction according to the second order prediction flag of the decoding block and the sub second order prediction flag of the at least one sub-block of the decoding block to obtain a prediction image; and
wherein if the value of sop_flag is 1, it indicates that second order prediction is performed on at least one sub-block of the decoding block; and wherein if the value of sub_sop_flag is 0, it indicates that no second order prediction is performed on the corresponding sub-block of the decoding block; if the value of sub_sop_flag is 1, it indicates that second order prediction is performed on the corresponding sub-block of the decoding block; wherein the decoding block is a macroblock, and the size of the macroblock comprises 16 x 16, and the sub-block of the decoding block is a sub-block of the macroblock, and the size of said sub-block of the macroblock comprises 8 x 16 or 8 x 8,
further comprising:

a third obtaining module, configured to, for the sub-block of the decoding block, on which second order predication is performed, parse from a bit stream a corresponding prediction second prediction mode flag, pred_sp_mode_flag which is used to perform second order prediction, wherein the pred_sp_mode_flag indicates whether a predicted mode is used as the second order intra-frame prediction mode.

**Patentansprüche**

1. Videokodierungsverfahren, umfassend:

Generieren eines auf eine Prädiktion zweiter Ordnung bezogenen Flags, sop_flag, für einen Kodierungsblock;
wenn der Wert von sop_flag anzeigt, dass der Kodierungsblock eine Prädiktion zweiter Ordnung erfordert, Generieren eines auf eine Prädiktion zweiter Ordnung bezogenen Sub-Flags, sub_sop_flag, für mindestens einen Sub-Block des Kodierungsblocks, wobei das auf eine Prädiktion zweiter Ordnung bezogene Sub-Flag des Sub-Blocks konfiguriert ist, um anzuzeigen, ob an dem Sub-Block eine Prädiktion zweiter Ordnung durchgeführt wird;
Durchführen einer Intra-Prädiktion zweiter Ordnung gemäß dem auf eine Prädiktion zweiter Ordnung bezogenen Flag des Kodierungsblocks und dem auf eine Prädiktion zweiter Ordnung bezogenen Sub-Flag des mindestens einen Sub-Blocks des Kodierungsblocks, um ein Prädiktionsbild zu beziehen;
Beziehen einer Prädiktionsabweichung gemäß dem Prädiktionsbild und Kodieren der Prädiktionsabweichung; und
Durchführen einer Entropiekodierung an dem auf eine Prädiktion zweiter Ordnung bezogenen Flag des Kodierungsblocks und dem auf eine Prädiktion zweiter Ordnung bezogenen Sub-Flag des Sub-Blocks des Kodierungsblocks, Schreiben kodierter Flags in einen Bitstrom und Senden des Bitstroms an ein Dekodierungsende;
wobei der Wert von sop_flag, falls er 1 ist, anzeigt, dass an mindestens einem Sub-Block des Kodierungsblocks eine Prädiktion zweiter Ordnung durchgeführt wird; und wobei der Wert von sub_sop_flag, falls er 0 ist, anzeigt, dass am entsprechenden Sub-Block des Kodierungsblocks keine Prädiktion zweiter Ordnung durchgeführt wird; der Wert von sub_sop_flag, falls er 1 ist, anzeigt, dass am entsprechenden Sub-Block des Kodierungsblocks eine Prädiktion zweiter Ordnung durchgeführt wird;

wobei der Kodierungsblock ein Makroblock ist und die Größe des Makroblocks 16 x 16 umfasst und der Sub-Block des Kodierungsblocks ein Sub-Block des Makroblocks ist und die Größe des Sub-Blocks des Makroblocks $8 \times 16$ oder 8 x 8 umfasst,

ferner umfassend:

Generieren eines entsprechenden Prädiktions-Flags eines Modus einer zweiten Prädiktion, pred_sp_mode_flag, das zum Durchführen einer Prädiktion zweiter Ordnung verwendet wird, für den Sub-Block des Kodierungsblocks, an dem eine Prädiktion zweiter Ordnung durchgeführt wird, wobei das pred_sp_mode_flag anzeigt, ob ein vorhergesagter Modus als Modus einer Intra-Prädiktion zweiter Ordnung verwendet wird.

2. Videodekodierungsverfahren, umfassend:

Beziehen eines auf eine Prädiktion zweiter Ordnung bezogenen Flags, sop_flag, eines Dekodierungsblocks, wobei das sop_flag durch Parsen aus einem Bitstrom ermittelt wird;

Beziehen eines auf eine Prädiktion zweiter Ordnung bezogenen Sub-Flags, sub_sop_flag, mindestens eines Sub-Blocks des Dekodierungsblocks, wenn das auf eine Prädiktion zweiter Ordnung bezogene Flag des Dekodierungsblocks anzeigt, dass der Dekodierungsblock eine Prädiktion zweiter Ordnung erfordert, wobei das sub_sop_flag durch Parsen aus dem Bitstrom ermittelt wird;

Durchführen einer Intra-Prädiktion zweiter Ordnung gemäß dem auf eine Prädiktion zweiter Ordnung bezogenen Flag des Dekodierungsblocks und dem auf eine Prädiktion zweiter Ordnung bezogenen Sub-Flag des mindestens einen Sub-Blocks des Dekodierungsblocks, um ein Prädiktionsbild zu beziehen; und

wobei der Wert von sop_flag, falls er 1 ist, anzeigt, dass an mindestens einem Sub-Block des Dekodierungsblocks eine Prädiktion zweiter Ordnung durchgeführt wird; und wobei der Wert von sub_sop_flag, falls er 0 ist, anzeigt, dass am entsprechenden Sub-Block des Dekodierungsblocks keine Prädiktion zweiter Ordnung durchgeführt wird; der Wert von sub_sop_flag, falls er 1 ist, anzeigt, dass am entsprechenden Sub-Block des Dekodierungsblocks eine Prädiktion zweiter Ordnung durchgeführt wird;

wobei der Dekodierungsblock ein Makroblock ist und die Größe des Makroblocks 16 x 16 umfasst und der Sub-Block des Dekodierungsblocks ein Sub-Block des Makroblocks ist und die Größe des Sub-Blocks des Makroblocks $8 \times 16$ oder 8 x 8 umfasst,

ferner umfassend:

für den Sub-Block des Dekodierungsblocks, an dem eine Prädiktion zweiter Ordnung durchgeführt wird, Ermitteln eines entsprechenden Prädiktions-Flags eines Modus einer zweiten Prädiktion, pred_sp_mode_flag, durch Parsen aus einem Bitstrom, das zum Durchführen einer Prädiktion zweiter Ordnung verwendet wird, wobei das pred_sp_mode_flag anzeigt, ob ein vorhergesagter Modus als Modus einer Intra-Prädiktion zweiter Ordnung verwendet wird.

3. Videokodierungsvorrichtung, umfassend:

ein erstes Generierungsmodul, das konfiguriert ist, um ein auf eine Prädiktion zweiter Ordnung bezogenes Flag, sop_flag, für einen Kodierungsblock zu generieren;

ein zweites Generierungsmodul, das konfiguriert ist, um ein auf eine Prädiktion zweiter Ordnung bezogenes Sub-Flag, sub_sop_flag, für mindestens einen Sub-Block des Kodierungsblocks zu generieren, wenn der Wert von sop_flag anzeigt, dass der Kodierungsblock eine Prädiktion zweiter Ordnung erfordert, wobei das auf eine Prädiktion zweiter Ordnung bezogene Sub-Flag des Sub-Blocks verwendet wird, um anzuzeigen, ob an dem Sub-Block eine Prädiktion zweiter Ordnung durchgeführt wird;

ein Prädiktionsmodul, das konfiguriert ist, um eine Intra-Prädiktion zweiter Ordnung gemäß dem auf eine Prädiktion zweiter Ordnung bezogenen Flag des Kodierungsblocks und dem auf eine Prädiktion zweiter Ordnung bezogenen Sub-Flag des mindestens einen Sub-Blocks des Kodierungsblocks durchzuführen, um ein Prädiktionsbild zu beziehen;

ein Kodierungsmodul, das konfiguriert ist, um eine Prädiktionsabweichung gemäß dem Prädiktionsbild zu beziehen und die Prädiktionsabweichung zu kodieren; und

wobei das Kodierungsmodul ferner konfiguriert ist, um eine Entropiekodierung am auf eine Prädiktion zweiter Ordnung bezogenen Flag des Kodierungsblocks und am auf eine Prädiktion zweiter Ordnung bezogenen Sub-Flag des Sub-Blocks durchzuführen und kodierte Flags in einen Bitstrom zu schreiben;

wobei der Wert von sop_flag, falls er 1 ist, anzeigt, dass an mindestens einem Sub-Block des Dekodierungsblocks eine Prädiktion zweiter Ordnung durchgeführt wird;

und wobei der Wert von sub_sop_flag, falls er 0 ist, anzeigt, dass am entsprechenden Sub-Block des Dekodierungsblocks keine Prädiktion zweiter Ordnung durchgeführt wird; der Wert von sub_sop_flag, falls er 1 ist, anzeigt, dass am entsprechenden Sub-Block des Dekodierungsblocks eine Prädiktion zweiter Ordnung durchgeführt wird;

wobei der Dekodierungsblock ein Makroblock ist und die Größe des Makroblocks 16 x 16 umfasst und der Sub-Block des Dekodierungsblocks ein Sub-Block des Makroblocks ist und die Größe des Sub-Blocks des Makroblocks 8 × 16 oder 8 x 8 umfasst,

ferner umfassend:

ein drittes Generierungsmodul, das konfiguriert ist, um für den Sub-Block des Kodierungsblocks, an dem eine Prädiktion zweiter Ordnung durchgeführt wird, ein entsprechendes Prädiktions-Flag eines Modus einer zweiten Prädiktion, pred_sp_mode_flag, zu generieren, das zum Durchführen einer Prädiktion zweiter Ordnung verwendet wird, wobei das pred_sp_mode_flag anzeigt, ob ein vorhergesagter Modus als Modus einer Intra-Prädiktion zweiter Ordnung verwendet wird.

4. Videodekodierungsvorrichtung, umfassend:

ein erstes Bezugsmodul, das konfiguriert ist, um ein auf eine Prädiktion zweiter Ordnung bezogenes Flag, sop_flag, eines Dekodierungsblocks zu beziehen, wobei das sop_flag durch Parsen aus einem Bitstrom ermittelt wird;

ein zweites Bezugsmodul, das konfiguriert ist, um ein auf eine Prädiktion zweiter Ordnung bezogenes Sub-Flag, sub_sop_flag, mindestens eines Sub-Blocks des Dekodierungsblocks zu beziehen, wenn das auf eine Prädiktion zweiter Ordnung bezogene Flag des Dekodierungsblocks anzeigt, dass der Dekodierungsblock eine Prädiktion zweiter Ordnung erfordert, wobei das sub_sop_flag durch Parsen aus dem Bitstrom ermittelt wird;

ein Dekodierungsprädiktionsmodul, das konfiguriert ist, um eine Intra-Prädiktion zweiter Ordnung gemäß dem auf eine Prädiktion zweiter Ordnung bezogenen Flag des Dekodierungsblocks und dem auf eine Prädiktion zweiter Ordnung bezogenen Sub-Flag des mindestens einen Sub-Blocks des Dekodierungsblocks durchzuführen,

um ein Prädiktionsbild zu beziehen; und

wobei der Wert von sop_flag, falls er 1 ist, anzeigt, dass an mindestens einem Sub-Block des Dekodierungsblocks eine Prädiktion zweiter Ordnung durchgeführt wird;

und wobei der Wert von sub_sop_flag, falls er 0 ist, anzeigt, dass am entsprechenden Sub-Block des Dekodierungsblocks keine Prädiktion zweiter Ordnung durchgeführt wird; der Wert von sub_sop_flag, falls er 1 ist, anzeigt, dass am entsprechenden Sub-Block des Dekodierungsblocks eine Prädiktion zweiter Ordnung durchgeführt wird;

wobei der Dekodierungsblock ein Makroblock ist und die Größe des Makroblocks 16 x 16 umfasst und der Sub-Block des Dekodierungsblocks ein Sub-Block des Makroblocks ist und die Größe des Sub-Blocks des Makroblocks 8 x 16 oder 8 x 8 umfasst,

ferner umfassend:

ein drittes Bezugsmodul, das konfiguriert ist, um für den Sub-Block des Dekodierungsblocks, an dem eine Prädiktion zweiter Ordnung durchgeführt wird, aus einem Bitstrom ein entsprechendes Prädiktions-Flag eines Modus einer zweiten Prädiktion, pred_sp_mode_flag, das zum Durchführen einer Prädiktion zweiter Ordnung verwendet wird, durch Parsen zu ermitteln, wobei das pred_sp_mode_flag anzeigt, ob ein vorhergesagter Modus als Modus einer Intra-Prädiktion zweiter Ordnung verwendet wird.

## Revendications

1. Procédé de codage vidéo, comprenant :

la génération d'un fanion de prédiction de second ordre, sop_flag, pour un bloc de codage ;

quand la valeur du fanion sop_flag indique que le bloc de codage nécessite une prédiction de second ordre, la génération d'un sous-fanion de prédiction de second ordre, sub_sop_flag, pour au moins un sous-bloc du bloc de codage, dans lequel le sous-fanion de prédiction de second ordre du sous-bloc est configuré pour indiquer qu'une prédiction de second ordre est exécutée ou non sur le sous-bloc ;

l'exécution d'une prédiction de second ordre intra-trame conformément au fanion de prédiction de second ordre du bloc de codage et au sous-fanion de prédiction de second ordre de l'au moins un sous-bloc du bloc de codage pour obtenir une image de prédiction ;

l'obtention d'un résidu de prédiction conformément à l'image de prédiction, et le codage du résidu de prédiction ; et

l'exécution d'un codage par entropie sur le fanion de prédiction de second ordre du bloc de codage et le sous-fanion de prédiction de second ordre du sous-bloc du bloc de codage, l'écriture de fanions codés dans un flux binaire, et l'envoi du flux binaire à une extrémité de décodage ;

dans lequel une valeur de fanion sop_flag de 1 indique qu'une prédiction de second ordre est exécutée sur au moins un sous-bloc du bloc de codage ; et dans lequel une valeur de fanion sub_sop_flag de 0 indique qu'aucune prédiction de second ordre n'est exécutée sur le sous-bloc correspondant du bloc de codage ; une valeur de fanion sub_sop_flag de 1 indique qu'une prédiction de second ordre est exécutée sur le sous-bloc correspondant du bloc de codage ;

dans lequel le bloc de codage est un macrobloc, et la taille du macrobloc comprend 16 x 16, et le sous-bloc du bloc de codage est un sous-bloc du macrobloc, et la taille dudit sous-bloc du macrobloc comprend 8 x 16 ou 8 x 8, comprenant en outre :

la génération, pour le sous-bloc du bloc de codage, sur lequel une prédiction de second ordre est exécutée, d'un fanion de mode de prédiction de second ordre prédit, pred_sp_mode_flag, correspondant, lequel est utilisé pour exécuter une prédiction de second ordre, dans lequel le fanion pred_sp_mode_flag indique qu'un mode prédit est utilisé ou non comme mode de prédiction de second ordre intra-trame.

**2.** Procédé de décodage vidéo, comprenant :

l'obtention d'un fanion de prédiction de second ordre, sop_flag, d'un bloc de décodage, dans lequel le fanion sop_flag est analysé syntaxiquement à partir d'un flux binaire ;

l'obtention d'un sous-fanion de prédiction de second ordre, sub_sop_flag, d'au moins un sous-bloc du bloc de décodage quand le fanion de prédiction de second ordre du bloc de décodage indique que le bloc de décodage nécessite une prédiction de second ordre, dans lequel le fanion sub_sop_flag est analysé syntaxiquement à partir du flux binaire ;

l'exécution d'une prédiction de second ordre intra-trame conformément au fanion de prédiction de second ordre du bloc de décodage et au sous-fanion de prédiction de second ordre de l'au moins un sous-bloc du bloc de décodage pour obtenir une image de prédiction ; et

dans lequel une valeur de fanion sop_flag de 1 indique qu'une prédiction de second ordre est exécutée sur au moins un sous-bloc du bloc de décodage ; et dans lequel une valeur de fanion sub_sop_flag de 0 indique qu'aucune prédiction de second ordre n'est exécutée sur le sous-bloc correspondant du bloc de décodage ; une valeur de fanion sub_sop_flag de 1 indique qu'une prédiction de second ordre est exécutée sur le sous-bloc correspondant du bloc de décodage ;

dans lequel le bloc de décodage est un macrobloc, et la taille du macrobloc comprend 16 x 16, et le sous-bloc du bloc de décodage est un sous-bloc du macrobloc, et la taille dudit sous-bloc du macrobloc comprend 8 x 16 ou 8 x 8, comprenant en outre :

pour le sous-bloc du bloc de décodage, sur lequel une prédiction de second ordre est exécutée, l'analyse syntaxique d'un fanion de mode de prédiction de second ordre prédit, pred_sp_mode_flag, correspondant à partir d'un flux binaire, lequel est utilisé pour exécuter une prédiction de second ordre, dans lequel le fanion pred_sp_mode_flag indique qu'un mode prédit est utilisé ou non comme mode de prédiction de second ordre intra-trame.

**3.** Appareil de codage vidéo, comprenant :

un premier module de génération, configuré pour générer un fanion de prédiction de second ordre, sop_flag, pour un bloc de codage ;

un deuxième module de génération, configuré pour générer un sous-fanion de prédiction de second ordre, sub_sop_flag, pour au moins un sous-bloc du bloc de codage quand la valeur du fanion sop_flag indique que le bloc de codage nécessite une prédiction de second ordre, dans lequel le sous-fanion de prédiction de second ordre du sous-bloc est configuré pour indiquer qu'une prédiction de second ordre est exécutée ou non sur le sous-bloc ;

un module de prédiction, configuré pour exécuter une prédiction de second ordre intra-trame conformément au fanion de prédiction de second ordre du bloc de codage et au sous-fanion de prédiction de second ordre de l'au moins un sous-bloc du bloc de codage pour obtenir une image de prédiction ;

un module de codage, configuré pour obtenir un résidu de prédiction conformément à l'image de prédiction, et coder le résidu de prédiction ; et

le module de codage est configuré en outre pour exécuter un codage par entropie sur le fanion de prédiction de second ordre du bloc de codage et le sous-fanion de prédiction de second ordre du sous-bloc, et écrire des fanions codés dans un flux binaire ;

dans lequel une valeur de fanion sop_flag de 1 indique qu'une prédiction de second ordre est exécutée sur au moins un sous-bloc du bloc de décodage ; et dans lequel une valeur de fanion sub_sop_flag de 0 indique qu'aucune prédiction de second ordre n'est exécutée sur le sous-bloc correspondant du bloc de décodage ; une valeur de fanion sub_sop_flag de 1 indique qu'une prédiction de second ordre est exécutée sur le sous-bloc correspondant du bloc de décodage ;

dans lequel le bloc de décodage est un macrobloc, et la taille du macrobloc comprend 16 x 16, et le sous-bloc du bloc de décodage est un sous-bloc du macrobloc, et la taille dudit sous-bloc du macrobloc comprend 8 x 16 ou 8 x 8,

comprenant en outre :

un troisième module de génération, configuré pour générer, pour le sous-bloc du bloc de codage, sur lequel une prédiction de second ordre est exécutée, un fanion de mode de prédiction de second ordre prédit, pred_sp_mode_flag, correspondant, lequel est utilisé pour exécuter une prédiction de second ordre, dans lequel le fanion pred_sp_mode_flag indique qu'un mode prédit est utilisé ou non comme mode de prédiction de second ordre intra-trame.

4. Appareil de décodage vidéo, comprenant :

un premier module d'obtention configuré pour obtenir un fanion de prédiction de second ordre, sop_flag, d'un bloc de décodage, dans lequel le fanion sop_flag est analysé syntaxiquement à partir d'un flux binaire ;

un deuxième module d'obtention, configuré pour obtenir un sous-fanion de prédiction de second ordre, sub_sop_flag d'au moins un sous-bloc du bloc de décodage quand le fanion de prédiction de second ordre du bloc de décodage indique que le bloc de décodage nécessite une prédiction de second ordre, dans lequel le fanion sub_sop_flag est analysé syntaxiquement à partir du flux binaire ;

un module de prédiction de décodage, configuré pour exécuter une prédiction de second ordre intra-trame conformément au fanion de prédiction de second ordre du bloc de décodage et au sous-fanion de prédiction de second ordre de l'au moins un sous-bloc du bloc de décodage pour obtenir une image de prédiction ; et

dans lequel une valeur de fanion sop_flag de 1 indique qu'une prédiction de second ordre est exécutée sur au moins un sous-bloc du bloc de décodage ; et dans lequel une valeur de fanion sub_sop_flag de 0 indique qu'aucune prédiction de second ordre n'est exécutée sur le sous-bloc correspondant du bloc de décodage ; une valeur de fanion sub_sop_flag de 1 indique qu'une prédiction de second ordre est exécutée sur le sous-bloc correspondant du bloc de décodage ;

dans lequel le bloc de décodage est un macrobloc, et la taille du macrobloc comprend 16 x 16, et le sous-bloc du bloc de décodage est un sous-bloc du macrobloc, et la taille dudit sous-bloc du macrobloc comprend 8 x 16 ou 8 x 8,

comprenant en outre :

un troisième module d'obtention, configuré pour, pour le sous-bloc du bloc de décodage, sur lequel une prédiction de second ordre est exécutée, analyser syntaxiquement à partir d'un flux binaire un fanion de mode de prédiction de second ordre prédit, pred_sp_mode_flag, correspondant, qui est utilisé pour exécuter une prédiction de second ordre, dans lequel le fanion pred_sp_mode_flag indique qu'un mode prédit est utilisé ou non comme mode de prédiction de second ordre intra-trame.

Generate sop_flag for a coding block ⌐ 11

When the coding block requires second order prediction, generate sop_flag for at least one sub-block of the coding block, where sop_flag of the sub-block is used to indicate whether second order prediction is performed on the sub-block ⌐ 12

Perform prediction according to sop_flag and at least one sub_sop_flag of the coding block to obtain a prediction image ⌐ 13

Obtain a prediction residual according to the prediction image, and code the prediction residual ⌐ 14

FIG. 1

Obtain sop_flag of a decoding block ⌐ 21

When sop_flag of the decoding block indicates that decoding block requires second order predication, obtain sop_flag of at least one sub-block of the decoding block ⌐ 22

Perform prediction according to sop_flag and at least one sub_sop_flag of the decoding block to obtain a prediction image ⌐ 23

FIG. 2

Generate sop_flag of an M x N coding block according to a rule and write sop_flag of the M x N coding block into a bit stream after entropy coding the sop_flag of the M x N coding block

31

Generate sub_sop_flag of an m x n sub-block according to a rule and write sub_sop_flag of the m x n sub-block into a bit stream after entropy coding the sub_sop_flag of the m x n sub-block

32

When the value of sub_sop_flag of a sub-block is 1, generate syntax elements such as pred_sp_mode_flag and rem_sp_mode related to second order prediction according to a rule, and write the syntax elements related to second order prediction into a bit stream after entropy-coding the syntax elements related to second order prediction

33

FIG. 3

| | (8 x 8) block 2 |
| (8 x 16) block 1 | |
| | (8 x 8) block 3 |

FIG. 4

Parse sop_flag of an M x N decoding block from a bit stream to learn whether second order prediction is performed for the M x N decoding block and its m x n sub-blocks — 51

Parse and obtain sub_sop_flag — 52

When the value of sub_sop_flag of a sub-block is 1, parse syntax elements related to second order prediction from the bit stream, such as pred_sp_mode_flag and rem_sp_mode, and perform reconstruction using second order prediction on all second order prediction blocks of the sub-block, where the same second order prediction mode is used for all second order prediction blocks of the sub-block — 53

FIG. 5

Obtain sop_flag of an M x N coding block according to a reference frame or information about a decoded block at the current frame, Where the sop_flag is used to indicate whether second order prediction is to be performed for the M x N coding block and its m x n sub-blocks — 61

Obtain sub_sop_flag of the m x n sub-blocks adaptively according to a rule and the reference frame or information about the decoded block at the current frame — 62

When the value of sub_sop_flag of a sub-block is 1, generate syntax elements such as pred_sp_mode_flag and rem_sp_mode related to second order predictiOn according to a rule, and write the syntax elements related to second order prediction into a bit stream after entropy-coding the syntax elements related to second order prediction — 63

FIG. 6

Obtain sop_flag of an M x N decoding block adaptively according to a reference frame or information about a decoded block at the current frame, where the sop_flag is used to indicate whether second order prediction is to be performed on the M x N decoding block and its m x n sub-blocks

71

Obtain sub_sop_flag adaptively

72

When the value of sub_sop_flag is 1, parse syntax elements related to second order prediction from the bit stream, such as pred_sp_mode_flag and rem_sp_mode, and perform reconstruction using second order prediction on all second order prediction blocks of the sub-block, where the same second order prediction mode is used for all second order prediction blocks of the sub-block

73

FIG. 7

Generate sop_flag for an M x N coding block according to a rule and write sop_flag of the M x N coding block into a bit stream after entropy coding the sop_flag of the M x N coding block

81

Generate sub_sop_flag for an m x n sub- block according to a rule and write sub_sop_flag of the m x n sub- block into a bit stream after entropy coding the sub_sop_flag of the m x n sub-block

82

When the value of sub_sop_flag of a first-level sub-block is 1, generate second_sub_sop_flag for each second-level sub-block of the first-level sub-block according to a rule to indicate whether decoding and reconstruction using second order prediction are to be performed on all secOnd order prediction blocks of the second-level sub-block, and write second_sub_sop_flag into a bit stream after entropy coding the second_sub_sop_flag

83

FIG. 8

**32 x 32 macroblock**
**sop_flag**

**16 x 16 first-level sub-block**
**sub_sop_flag**

| 16x16 first-level sub-block A sub_sop_flag | 16x16 first-level sub-block B sub_sop_flag |
|---|---|
| 16x16 first-level sub-block C sub_sop_flag | 16x16 first-level sub-block D sub_sop_flag |

| 8x8 second-level sub-block second_sub_sop_flag | 8x8 second-level sub-block second_sub_sop_flag |
|---|---|
| 8x8 second-level sub-block second_sub_sop_flag | 8x8 second-level sub-block second_sub_sop_flag |

FIG. 9

| Parse sop_flag of an M x N decoding block from a bit stream, where the sop_flag is used to indicate whether second order prediction is performed on the M x N decoding block and its m x n sub-blocks | 101 |
|---|---|

| Parse sub_sop_flag of the sub-block | 102 |
|---|---|

| When the value of sub_sop_flag of a first-lEvel sub-block is 1, parse second_sub_sop_flag from the bit stream for each second-level sub-block of the first-level sub-block, where the second_sub_sop_flag is used to indicate whether decoding and reconstruction using second order prediction are performed on all second order prediction blocks of the second-level sub-block | 103 |
|---|---|

FIG. 10

Syntax
element
SE

Binarization 111

Binarized SE

Context
modeling 112

Arithmetic
coding 113

113

Arithmetic
coding

FIG. 11

$$\rho = (R>>6)\&3$$
$$P_{LPS}=TabRangel.PS[\sigma,\rho]$$
$$R=R\cdot P_{LPS}$$

Binary variant
（binVal）！＝ω

Yes

No

L=L+R
R= $P_{LPS}$

σ！＝0

No

ω=1-ω

Yes

σ=min(σ+1,62)

σ=TransIDxLPS[σ]

RenormE

Done（Done）

FIG. 12

Establish three different probability models for sub_sop_flag, and correspondingly initialize the probability models

131

Select a probability model for sub_sop_flag of the current m x n sub-block C according to the value of sub_sop_flag of the left m x n sub-block A and upper m x n sub-block B that are neighboring to the current m x n sub-block C

132

Perform CABAC by using a selected probability model

133

FIG. 13

FIG. 14

| Establish three different probability models for sub_sop_flag, and initialize the probability models | 151 |

| Select a probability model for sub_sop_flag of the current m x n sub-block C according to the value of sub_sop_flag of the left m x n sub-block A and upper m x n sub-block B that are neighboring to the current m x n sub-block C | 152 |

| Perform CABAC bit stream by parsing using the selected probability model, i.e., perform binary arithmetic decoding | 153 |

FIG. 15

FIG. 16

FIG. 17

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008082253 A1

**Non-patent literature cited in the description**

- **SHANGWEN LI et al.** Second order prediction of Video Coding. *MPEG MEETING,* 29 January 2009, vol. 87, 1-8

- Spatial Scalability Within the H.264/AVC Scalable Video Coding Extension. **SEGALL C A et al.** IEEE TRANSACTIONS ON CRICUITS AND SYSTEMS FOR VIDEO TECHNOLOGY. IEEE SERVICE CENTER, 01 September 2007, vol. 17, 1121-1135